# EUROPÄISCHE PATENTANMELDUNG

(11) **EP 4 703 124 A1**
(43) Veröffentlichungstag der Anmeldung: **04.03.2026**
(21) Anmeldenummer: 24196771.0
(22) Anmeldetag: 27.08.2024
(51) Int. Cl.: B29C 64/112, B33Y 10/00, B33Y 70/00, B33Y 80/00

(54) **HARZZUSAMMENSETZUNG ZUR ADDITIVEN FERTIGUNG PORÖSER FORMKÖRPER**

(71) Anmelder: ALWA Technische Produkte für Kunststoffverarbeitung Modell- und Formbau GmbH, 48599 Gronau (DE)
(72) Erfinder: Dirkmorfeld, Nadin, 48599 Gronau (DE)
(74) Vertreter: Von Rohr Patentanwälte Partnerschaft mbB

(57) **Zusammenfassung**

Die Offenbarung betrifft das technische Gebiet der Kunststoffverarbeitung, insbesondere der Herstellung und Verarbeitung von Kunstharzen und beschreibt im Detail eine Zusammensetzung, insbesondere eine 3D-verdruckbare Zusammensetzung, auf Kunstharzbasis sowie deren Herstellung und Verwendung für die Herstellung von Textilverbundstoffen für Schutzkleidung .

## Beschreibung

Die vorliegende Erfindung betrifft das technische Gebiet der Kunststoffverarbeitung, insbesondere der Herstellung und Verarbeitung von Kunstharzen.

Insbesondere betrifft die vorliegende Erfindung eine Zusammensetzung, insbesondere eine 3D-verdruckbare Zusammensetzung, auf Kunstharzbasis.

Weiterhin betrifft die vorliegende Erfindung ein Verfahren zur Herstellung einer solchen Zusammensetzung sowie deren Verwendung in einem Verfahren zur Herstellung 3D-gedruckter, insbesondere poröser, Formkörper und/oder von mit 3D-gedruckten, insbesondere porösen, Formkörpern ausgestatteten Substraten bzw. für 3D-gedruckte, insbesondere poröse, Formkörper und/oder als diesbezügliche Ausgangsmasse.

Zudem betrifft die vorliegende Erfindung ein Verfahren, insbesondere ein 3D-Druckverfahren, zur Herstellung 3D-gedruckter, insbesondere poröser, Formkörper und/oder von mit 3D-gedruckten, insbesondere porösen, Formkörpern ausgestatteten Substraten ausgehend von einer Zusammensetzung auf Kunstharzbasis.

Weiterhin betrifft die vorliegende Erfindung auch einen Formkörper, insbesondere einen 3D-gedruckten, insbesondere porösen, Formkörper, auf Kunstharzbasis sowie dessen Verwendung zur Verstärkung von mit dem Formkörper ausgestatteten Substraten, insbesondere wobei das Substrat ein textiles Substrat ist.

Schließlich betrifft die vorliegende Erfindung ein Substrat, insbesondere ein textiles Substrat, aufweisend einen, insbesondere 3D-gedruckten, insbesondere porösen, Formkörper auf Kunstharzbasis als zumindest bereichsweise Verstärkung.

Eine Reihe von Berufen erfordert das Tragen spezieller Schutzkleidung, um Gefahren, die mit der Ausübung der beruflichen Tätigkeit einhergehen, vorzubeugen. Polizisten, Mitarbeitende von Sicherheitsfirmen und Feuerwehrleute etwa sind insbesondere bei Tätigkeiten bzw. Einsätzen mit Personenkontakt hohen Sicherheitsrisiken ausgesetzt. Entsprechend benötigen Angehörige dieser Berufsgruppen Arbeitsschutzkleidung, die einerseits vor allem vor Verletzungen, beispielsweise durch körperliche Krafteinwirkung oder die Einwirkung zumindest kleinerer tragbarer Waffen, schützen kann. Andererseits muss die Schutzkleidung hinreichend flexibel sowie komfortabel sein, um dem Träger einen notwendigen Bewegungsfreiraum zu geben sowie eine lange Tragedauer möglichst angenehm zu gestatten.

Dieses Spannungsfeld aus Tragekomfort, insbesondere auch im Hinblick auf eine gute Atmungsaktivität sowie Schweißabführung, und hinreichender Sicherheitsleistung einer Schutzbekleidung stellt regelmäßig eine Herausforderung insbesondere auch im Zusammenhang mit der Fertigung und Konzeptionierung der Schutzbekleidung dar.

Derzeit werden beispielsweise speziell Schnitt- und Stichschutztextilien unter Verwendung eines Oberstoffes (Baumwolle, Polyester) und eines Unterstoffes (Schutzfasern, z. B. Dyneema Fasern) produziert. Regelmäßig sind die verwendeten Schutzfasern nicht atmungsaktiv. Daher ist häufig abzuwägen, ob ein Schnitt- und Stichschutztextil entweder durchgehend stich- und schnittsicher ausgebildet sein soll oder ob ungeschützte Bereich vorzusehen sind, um die Atmungsaktivität des Textils zu erhöhen.

Gleichzeitig ist das Einbringen von Materialverstärkungen, beispielsweise mittels nachgelagerten Einnähens, in produktionstechnischer Hinsicht aufwendig sowie meist auch nicht automatisiert möglich. Dies gestaltet die Produktion entsprechender Schutzkleidung sowohl zeit- als auch kostenaufwändig.

3D-Druckverfahren gestatten die gezielte individuelle Erzeugung von Formkörpern beispielsweise zur Verwendung als Materialverstärkung. Die Druckverfahren zeichnen sich in der Regel durch eine hohe Flexibilität und einen hohen Automatisierungsgrad aus, was Produktionszeiten und -kosten senken könnte sowie bislang nicht zugängliche Textildesigns ermöglichen würde. Jedoch weisen die derzeit für die Verwendung in Druckverfahren zur Verfügung stehenden Harze regelmäßig keine Atmungsaktivität auf, so dass die Produktion atmungsaktiver Verbundstoffe bzw. -textilien von vornherein ausscheidet. Auch beträgt die Produktlebensdauer der üblicherweise eingesetzten Duroplaste regelmäßig lediglich 2 bis 3 Jahre. Der Grund hierfür sind Restmonomere im Duroplast, welche mit zunehmender Anwendungsdauer und insbesondere unter UV-Einstrahlung nachträglich aushärten und so die gedruckten Strukturen zerstören bzw. brüchig und spröde werden lassen.

Die vorhandenen Restmonomere sind bei direktem Hautkontakt zudem auch gesundheitsschädlich. Ebenso sind die Aspekte Adhäsion bzw. Verbindbarkeit von textilem Substrat und verdrucktem Material relevant.

Im Bereich des 3D-Drucks von Kunstharzen bestehen demnach derzeit noch eine Reihe von Limitierungen, welche die praktische Anwendbarkeit 3D-gedruckter Kunstharzformkörper beeinträchtigen. Insbesondere besteht im Stand der Technik in Zusammenhang mit der Applikation von 3D-Drucktechniken auf textile Substrate, beispielsweise zur Herstellung von materialverstärkten Schutztextilien, noch ein deutlicher Verbesserungsbedarf.

Es ist somit eine Aufgabe der vorliegenden Erfindung, die zuvor geschilderten mit dem Stand der Technik verknüpften Probleme und Nachteile zu überwinden bzw. zumindest abzuschwächen.

Insbesondere ist eine Aufgabe der vorliegenden Erfindung darin zu sehen, eine Harzzusammensetzung bereitzustellen, welche mittels 3D-Druck zu Formkörpern verarbeitet werden kann, wobei diese Formkörper insbesondere als atmungsaktive Materialverstärkung in textilen Anwendungen zum Einsatz kommen können.

Darüber hinaus ist eine Aufgabe der vorliegenden Erfindung darin zu sehen, ein Herstellungsverfahren für eine entsprechende Harzzusammensetzung sowie andererseits ein Verfahren für die Herstellung 3D-gedruckter Formköper bzw. damit bedruckter Substrate anzugeben.

Zur Lösung der zuvor geschilderten Aufgabe schlägt die vorliegende Erfindung, gemäß einem ersten Aspekt der vorliegenden Erfindung, daher eine Zusammensetzung, insbesondere eine 3D-verdruckbare Zusammensetzung, auf Kunstharzbasis gemäß Anspruch 1 vor; weitere vorteilhafte Ausgestaltungen dieses Erfindungsaspektes sind Gegenstand der diesbezüglichen Neben- bzw. Unteransprüche.

Weiterer Gegenstand der vorliegenden Erfindung, gemäß einem **zweiten** Aspekt der vorliegenden Erfindung, ist ein Verfahren zur Herstellung einer Zusammensetzung, insbesondere einer 3D-verdruckbaren Zusammensetzung, auf Kunstharzbasis gemäß dem dies betreffenden Anspruch.

Darüber hinaus Gegenstand der vorliegenden Erfindung, gemäß einem **dritten** Aspekt der vorliegenden Erfindung, ist die Verwendung einer erfindungsgemäßen Zusammensetzung in einem Verfahren zur Herstellung 3D-gedruckter, insbesondere poröser, Formkörper und/oder von mit 3D-gedruckten, insbesondere porösen, Formkörpern ausgestatteten Substraten bzw. die Verwendung einer erfindungsgemäßen Zusammensetzung für 3D-gedruckte, insbesondere poröse, Formkörper und/oder als diesbezügliche Ausgangsmasse gemäß dem dies betreffenden Anspruch.

Weiterer Gegenstand der vorliegenden Erfindung, gemäß einem **vierten** Aspekt der vorliegenden Erfindung, ist ein Verfahren, insbesondere 3D-Druckverfahren, zur Herstellung 3D-gedruckter, insbesondere poröser, Formkörper und/oder von mit 3D-gedruckten, insbesondere porösen, Formkörpern ausgestatteten Substraten gemäß dem dies betreffenden Anspruch; weitere vorteilhafte Ausgestaltungen dieses Erfindungsaspektes sind Gegenstand des diesbezüglichen Unteranspruchs.

Weiterer Gegenstand der vorliegenden Erfindung, gemäß einem **fünften** Aspekt der vorliegenden Erfindung, ist ein Formkörper, insbesondere ein 3D-gedruckter, insbesondere poröser, Formkörper, auf Kunstharzbasis erhältlich aus einer erfindungsgemäßen Zusammensetzung und/oder nach dem diesbezüglichen Herstellungsverfahren nach der vorliegenden Erfindung gemäß dem dies betreffenden Anspruch, bzw. ein Formkörper, insbesondere 3D-gedruckter, insbesondere poröser, Formkörper, auf Kunstharzbasis gemäß dem diesbezüglichen Anspruch.

Weiterer Gegenstand der vorliegenden Erfindung, gemäß einem **sechsten** Aspekt der vorliegenden Erfindung, ist die Verwendung eines, insbesondere 3D-gedruckten, insbesondere porösen, erfindungsgemäßen Formkörpers auf Kunstharzbasis zur Verstärkung von mit dem Formkörper ausgestatteten Substraten gemäß dem dies betreffenden Anspruch.

Schließlich weiterer Gegenstand der vorliegenden Erfindung, gemäß einem **siebten** Aspekt der vorliegenden Erfindung, ist ein Substrat, insbesondere ein textiles Substrat, aufweisend einen, insbesondere 3D-gedruckten, insbesondere porösen, Formkörper auf Kunstharzbasis nach der vorliegenden Erfindung als zumindest bereichsweise Verstärkung gemäß dem dies betreffenden Anspruch.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt aufgeführt sind, selbstverständlich auch in Bezug auf die übrigen Erfindungsaspekte entsprechend gelten, ohne dass dies einer gesonderten Erwähnung bedarf.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Ferner ist bei allen nachstehend genannten relativen bzw. prozentualen, insbesondere gewichtsbezogenen Mengenangaben zu beachten, dass diese Angaben im Hinblick auf das herangezogene Bezugssystem (z. B. Darreichungsform) vom Fachmann derart auszuwählen bzw. zu kombinieren sind, dass in der Summe - gegebenenfalls unter Einbeziehung weiterer Komponenten bzw. Inhaltsstoffe bzw. Zusatzstoffe bzw. Bestandteile, insbesondere wie nachfolgend definiert - stets 100 % bzw. 100 Gew.-% resultieren. Dies versteht sich für den Fachmann aber von selbst.

Darüber hinaus gilt für die Beschreibung der vorliegenden Erfindung, dass die jeweils im Zusammenhang mit den speziellen Ausgestaltungen, Ausführungsformen, Vorteilen, Beispielen oder dergleichen angeführten Merkmale der vorliegenden Erfindung auch in deren Kombination als offenbart gelten. Somit gelten vorliegend auch übergeordnete Kombinationen einzelner oder mehrerer Merkmale, welche für jeweilige Ausgestaltungen, Ausführungsformen, Anwendungsbeispiele oder dergleichen angeführt sind, als offenbart.

Insbesondere gilt für die die Erfindung charakterisierenden Merkmale zudem, dass auch beliebige Kombinationen dieser Merkmale als offenbart gelten, wobei Ausführungsformen gleicher Präferenz der verschiedenen Merkmale in ihrer Kombination bevorzugt sind (z.B. Mengen bzw. Mengenbereiche der betreffenden Wirk- und Inhaltsstoffe gleicher Präferenz).

Dies vorausgeschickt, wird nachfolgend der Gegenstand der vorliegenden Erfindung näher erläutert.

Gegenstand der vorliegenden Erfindung - gemäß einem **ersten** Aspekt der vorliegenden Erfindung - ist eine Zusammensetzung, insbesondere eine 3D-verdruckbare Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis,
wobei die Zusammensetzung die folgenden Komponenten a) bis d) aufweist:
   a) ein flüssiges Harz,
   b) ein pulverförmiges Harz,
   c) einen photoreaktiven Verdünner,
   d) einen löslichen Füllstoff,
wobei die Komponenten a) bis c) gleiche reaktive Gruppen aufweisen, und wobei der Füllstoff (Komponente d)) in einem polaren Lösungsmittel löslich ist.

Ein Kunstharz bezeichnet im Rahmen der vorliegenden Erfindung ein durch Polymerisations-, Polyadditions- oder Polykondensationsreaktionen synthetisch hergestelltes Harz. Es handelt sich insbesondere um weiche Feststoffe oder hochviskose Substanzen, die üblicherweise Prepolymere mit reaktiven funktionellen Gruppen enthalten. Synthetische Harze weisen in der Regel solche Hauptkomponenten auf, die bei Vermischung eine reaktionsfähige, härtbare Harzmasse ergeben. Bei der Härtung steigt die Viskosität des Harzes an und nach abgeschlossener Härtung wird ein unschmelzbarer Kunststoff (Duroplast) erhalten.

Der Begriff "reaktive Gruppe" bezeichnet oder meint dabei die reaktiven endständigen Gruppen bzw. Endgruppen eines Polymers, Prepolymers oder Oligomers und/oder den reaktiven Bestandteil bzw. die reaktive Gruppe oder reaktiven Gruppen eines Monomers. Die Bezeichnung Endgruppe erfasst im Rahmen der Erfindung dabei auch solche reaktiven Gruppen, die nach chemischer Zählweise bzw. Nomenklatur am Anfang eines Polymers, Prepolymers oder Oligomers lokalisiert sind.

Reaktiv ist eine Gruppe bzw. insbesondere funktionelle Gruppe im Rahmen der Erfindung, wenn sie dazu geeignet ist, Bindungen einzugehen und somit neue Bindungen zu Reaktionspartnern auszubilden, wobei derartige Bindungsbildungssprozesse sowohl inter- als auch intramolekular erfolgen können.

Prepolymer ist im Rahmen der Erfindung eine Sammelbezeichnung für reaktive Oligomere (oder auch Polymere), die zur Herstellung von Polymeren (Makromolekülen) dienen. Prepolymere meint also Vorprodukte, die im Gegensatz zu Endprodukten noch löslich oder schmelzbar sein können. Prepolymere erlauben beispielsweise insbesondere die Herstellung von Blockcopolymeren oder eine formgebende Verarbeitung, bevor eine Vernetzung bei fortschreitender Polymerisation zu einem duroplastischen Zustand führt.

Unter Oligomer wird im Rahmen der Erfindung ein Molekül verstanden, das aus mehreren strukturell gleichen oder ähnlichen Einheiten (Monomeren) aufgebaut ist. Bei einer größeren Anzahl dieser Einheiten spricht man von einem Polymer, wobei der Übergang unscharf bzw. fließend ist. Polymere stellen in der Regel Makromoleküle dar, die aus gleichen (Homopolymer) oder unterschiedlichen (Copolymer) Monomeren aufgebaut sind.

Die Anmelderin hat insgesamt überraschenderweise herausgefunden, dass sich die erfindungsgemäße Zusammensetzung vorteilhaft für die Verwendung in 3D-Druckverfahren bzw. additiven Fertigungsverfahren bzw. zur Herstellung von 3D-gedruckten Formkörpern eignet, insbesondere da die Zusammensetzung eine hohe Reaktivität, insbesondere Photoreaktivität, bezüglich des Aushärtens der Zusammensetzung mit bedarfsgerecht sowie über einen weiten Bereich flexibel einstellbaren, für den 3D-Druck optimierten Viskositätseigenschaften kombiniert. Mit der vorliegenden Erfindung wird also insbesondere eine schnell durchgehend härtbare Zusammensetzung mit für den 3D-Druck optimierten Fließeigenschaften bereitgestellt.

Es ist im Rahmen der vorliegenden Erfindung dabei insbesondere so, dass keine Kunststoffzusammensetzung in Form eines festen, unter Temperatureinwirkung aufschmelzbaren Filaments bereitgestellt wird, sondern eine fließfähige, schnell härtbare, insbesondere photohärtbare, Zusammensetzung, die im Zuge des Aushärtens duroplastische und insoweit dauerhafte, feste Strukturen ausbildet.

Dabei ist es im Rahmen der vorliegenden Erfindung vorteilhaft so, dass die Viskosität der erfindungsgemäßen Zusammensetzung einerseits sowie die finale Flexibilität bei gleichzeitiger Beibehaltung von starken Materialeigenschaften bzw. einer angestrebten Flexibilität der ausgehärteten Zusammensetzung bzw. des daraus resultierenden Formkörpers andererseits auf Basis der Komponenten der Zusammensetzung variiert und bedarfsgerecht eingestellt werden können. So kann eine für den jeweiligen intendierten Anwendungszweck sowie auch die individuell verfügbaren Druckparameter bzw. -bedingen optimierte Zusammensetzung im Rahmen der Erfindung unkompliziert bereitgestellt werden. Insbesondere kann die vorteilhafte Variabilität der erfindungsgemäßen Zusammensetzung auf die Komponenten a), b) und c) zurückgeführt werden, auf welche nachfolgend noch genauer eingegangen wird. Hierbei gestattet die Kombination der Komponenten a) und b) insbesondere eine Steuerung der Härte des aus der Zusammensetzung erhaltenen Formkörpers, während die Komponente c) im Zusammenwirken wiederum mit der Komponente a) dazu dient, eine Viskosität der Zusammensetzung einzustellen, die eine optimale 3D-Verdruckbarkeit gestattet.

Die Komponente d) der erfindungsgemäßen Zusammensetzung ermöglicht schließlich die Einstellung einer gewünschten, graduell einstellbaren Porosität in der ausgehärteten Zusammensetzung, so dass im Rahmen der vorliegenden Erfindung ein atmungsaktiver bzw. gas- und flüssigkeitsdurchlässiger Formkörper erhalten werden kann. Dies gelingt insbesondere, da die Komponente d) löslich ausgebildet ist, d. h. unter bestimmten Bedingungen aus der ausgehärteten Zusammensetzung gelöst werden kann, so dass eine poröse Struktur erhalten wird. Maßgeblich für das Einstellen einer Porosität ist damit die Komponente d), insbesondere wobei eine erhaltene Porosität, beispielsweise im Hinblick auf Porengrößen oder Porositätsgrade, gleichwohl von allen Komponenten der erfindungsgemäßen Zusammensetzung sowie deren Mengenverhältnis zueinander und somit insbesondere deren Zusammenwirken insgesamt abhängt. Hierbei ist besonders vorteilhaft hervorzuheben, dass die Komponente d) das Kunstharznetzwerk aus den Komponenten a) bis c) in keiner Weise beeinträchtigt, wie man es für einen Füllstoff annehmen könnte. Vielmehr bleibt es unvermindert möglich, Viskosität und Zielhärte in der Zusammensetzung zuverlässig einzustellen, während gleichzeitig auch eine ideal druckbare Zusammensetzung erhalten wird. Insoweit ist, ohne sich hierauf festlegen oder beschränken zu wollen, von einem synergistischen Zusammenwirken der Komponenten untereinander auszugehen, welches über die Summe der Einzelwirkungen hinausgeht und es erst ermöglicht, im Rahmen der Erfindung eine Zusammensetzung mit den vorangehend sowie auch nachfolgend noch beschriebenen besonderen technischen Eigenschaften bereitzustellen.

Insbesondere bietet die Zusammensetzung nach der vorliegenden Erfindung erstmals vorteilhaft die Möglichkeit, solche Formkörper bzw. insbesondere Materialverstärkungen für insbesondere textile Substrate bereitzustellen, die porös ausgebildet sind bzw. eine poröse Struktur aufweisen, sodass Materialverstärkungen für Textilien, die einerseits hinreichend fest und mechanisch widerstandsfähig und andererseits flüssigkeits- und gasdurchlässig, d. h. insbesondere atmungsaktiv, ausgebildet sind, bereitgestellt werden können. Darüber hinaus gestattet die poröse Ausgestaltung erfindungsgemäßer Formkörper vorteilhaft auch eine gewichtsoptimierte Konfiguration von mit den Formköpern ausgerüsteten Substraten bzw. insbesondere Textilien.

Im Hinblick auf die reaktive Gruppe bzw. reaktiven Gruppen der Komponenten a) bis c) hat es sich im Rahmen der vorliegenden Erfindung bewährt, wenn die reaktive Gruppe der Komponenten a) bis c) ausgewählt ist aus der Gruppe bestehend aus Acrylat, Acrylsäureester, Methacrylat, Methacrylsäureester, Acrylnitril, Styrol und deren Mischungen, insbesondere Acrylat, Acrylsäureester, Methacrylat, Methacrylsäureester und deren Mischungen, vorzugsweise Acrylsäureester, Methacrylsäureester und deren Mischungen.

Die vorgenannten reaktiven Gruppen zeichnen sich insbesondere durch eine hohe Reaktivität aus, welche vorteilhaft ein schnelles sowie durchgehendes bzw. vollständiges Aushärten der erfindungsgemäßen Zusammensetzung gestattet, insbesondere bei Verwendung in 3D-Druckanwendung. Ferner kann vorteilhaft eine hohe Haltbarkeit des ausgehärteten Harzes erreicht werden, da insbesondere nur geringe Mengen Restmonomer im Harz verbleiben. Dies trägt vorteilhaft auch zum Erzielen einer hohen inneren Festigkeit von erhaltenen Formkörpern bei.

Für den bevorzugten Fall, dass die reaktive Gruppe einen Acrylsäureester oder Methacrylsäureester aufweist bzw. umfasst, hat es sich im Rahmen der Erfindung bewährt, wenn es sich bei dem Ester bzw. der Estergruppe vorzugsweise um einen funktionalisierten Ester bzw. eine Estergruppe handelt, die neben der funktionellen Gruppe, über welche die Verknüpfung mit der (Meth-)Acrylsäure erfolgt, eine weitere funktionelle Gruppe aufweist. Bevorzugt ist die weitere funktionelle Gruppe eine OH-Gruppe bzw. ist der Ester hydroxyfunktionalisiert. Hierzu bietet es sich an, Alkyldiole mit primären OH-Gruppen oder vergleichbar reaktive Derivate dieser zu verwenden.

Im Rahmen der Erfindung ist es etwa bevorzugt, wenn Acrylsäureester oder Methacrylsäureester ausgewählt sind aus Hydroxyalkylacrylaten bzw. Hydroxyalkylmethylacrylaten, wobei die Hydroxygruppe eine primäre OH-Gruppe ist und der Alkylrest nicht mehr als 5 C-Atome, insbesondere nicht mehr als 4 C-Atome, vorzugsweise nicht mehr als 3 C-Atome umfasst. In einer bevorzugten Ausführungsform ist der Acrylsäureester etwa 2-Hydroxyethylacrylat bzw. der Methacrylsäureester ist Hydroxyethylmethylacrylat.

Die vorgenannten reaktiven Gruppen bzw. speziellen Beispiele für reaktive Gruppen oder Bestandteile der Komponenten a) bis c) gestatten es, die zuvor erwähnten assoziierten Vorteile in besonderem Maße zu realisieren.

Die Verwendung gleicher reaktiver Gruppen stellt insgesamt vorteilhaft eine optimale Kompatibilität der Komponenten a) bis c) der erfindungsgemäßen Zusammensetzung sicher, so dass die Reaktivität bzw. Härtungseigenschaften der Zusammensetzung vorhersagbar und kontrollierbar sowie insbesondere auch gut modulierbar sind. Die ist insbesondere auch vorteilhaft für die Anwendungseigenschaften und die Anwenderfreundlichkeit der Zusammensetzung.

Darüber hinaus ist es im Rahmen der Erfindung vorzugsweise vorgesehen, dass die Komponenten a) und b) die gleiche Basisstruktur aufweisen, insbesondere wobei die Basisstruktur eine Struktur aus Oligomeren, Prepolymeren und/oder Polymeren ausgewählt aus der Gruppe bestehend aus Urethan, Vinylester, Polyester, Acrylat und deren Mischungen, insbesondere Urethan, Acrylat und deren Mischungen, vorzugsweise Urethan, umfasst und/oder ist.

Im Rahmen der vorliegenden Erfindung meint bzw. bezeichnet der Begriff "Basisstruktur" dabei den Teil eines Oligomers, Prepolymers oder Polymers, der im Wesentlichen die Oligomer- oder Polymerkette formt bzw. die wesentlichen, d. h. den strukturell überwiegenden Teil der, Monomerkomponenten bzw. der Repetiereinheiten des Oligomers, Prepolymers oder Polymers umfasst bzw. ausmacht. In diesem Sinne meint beispielsweise "Basisstruktur aus Urethan", dass der strukturell wesentliche Teil der Oligomere, Prepolymere oder Polymere der Komponenten a) und b) Urethan-Repetiereinheiten aufweist. Strukturell wesentlicher Teil eines Oligomers, Prepolymers bzw. Polymers meint dabei, wie bereits angedeutet, beispielsweise den zahlen- oder mengenmäßig überwiegenden Teil einer (Haupt-)Kette des Oligomers oder (Pre-)Polymers.

Der Einsatz von Komponenten a) und b) mit gleichen Basisstrukturen ermöglicht es vorteilhaft, eine optimale Kompatibilität der Komponenten zu gewährleisten und trägt insoweit vorteilhaft dazu bei, homogene sowie im Hinblick auf die Materialeigenschaften ausgeglichene und kontrollierbar bzw. vorhersehbare reagierende Zusammensetzungen bereitzustellen, die sich dementsprechend konsequenterweise durch eine insbesondere für die Verwendung in 3D-Druckverfahren vorteilhafte Handhabbarkeit auszeichnen.

Im Hinblick auf die Komponente c) hat es sich im Rahmen der Erfindung generell bewährt, wenn die Komponente c) ein flüssiges reaktives Monomer umfasst und/oder ist. Bevorzugt weist das reaktive Monomer eine oder mehrere funktionelle (d. h. reaktive) Einheiten auf bzw. ist mono- oder multifunktionell ausgebildet. Bevorzugt werden monofunktionelle, bifunktionelle, trifunktionelle und/oder multifunktionelle reaktive Monomere eingesetzt, wobei monofunktionelle, bifunktionelle und/oder trifunktionelle reaktive Monomere bevorzugt sind. Die vorgenannten Monomere stellen vorteilhaft hohe Reaktivitäten und eine ausgeprägte Vernetzbarkeit sicher. Besonders bevorzugt ist es, wenn die Komponente c) ein flüssiges monofunktionelles Monomer, vorzugsweise ein flüssiges monofunktionelles Acrylsäureestermonomer, umfasst und/oder ist.

Auf diese Weise ist vorteilhaft eine optimale Kompatibilität mit den Komponenten a) und b), insbesondere im Hinblick auf die Aspekte Reaktivität und Vernetzbarkeit, gegeben. Gleichzeitig kann eine gute Reaktionskontrolle erzielt werden, so dass im Rahmen der vorliegenden Erfindung gut kontrolliert handhabbare Zusammensetzung bereitgestellt werden können.

Zudem hat es sich für die Komponente c) im Rahmen der Erfindung als vorteilhaft erwiesen, wenn die Komponente c) UV-reaktiv bzw. photoreaktiv bei einer Wellenlänge in einem Bereich von 150 nm bis 600 nm, insbesondere 275 nm bis 525 nm, vorzugsweise 325 nm bis 475 nm, ist. Dies meint insbesondere, dass bei gezielter Bestrahlung der erfindungsgemäßen Zusammensetzung mit Licht im vorgenannten Wellenlängenbereich, insbesondere mit UV-Licht, die Härtung der erfindungsgemäßen Zusammensetzung initiiert wird, insbesondere ausgehend bzw. unter wesentlicher Mitwirkung von der Komponente c). Insoweit kann im Rahmen der vorliegenden Erfindung auch insgesamt von einer photoreaktiven bzw. photohärtenden, insbesondere UV-reaktiven bzw. UV-härtenden, Zusammensetzung ausgegangen bzw. gesprochen werden.

Für die Komponenten d) hat es sich generell bewährt, wenn die Komponente d) in partikulärer, insbesondere kristalliner, Form, vorzugsweise in Form kristalliner Mikropartikel, vorliegt.

Im Rahmen der vorliegenden Erfindung werden dabei unter dem Begriff Mikropartikel solche Partikel bzw. insbesondere Kristallite mit einer Größe in einem Bereich von 0,1 µm bis 5.000 µm, insbesondere von 0,5 µm bis 2.500 µm, vorzugsweise 0,75 µm bis 2.000 µm, verstanden, insbesondere wobei die Bestimmung der Partikelgrößen in Anlehnung an DIN ISO 13320 mittels Laserbeugung erfolgt.

Mit Partikeln, deren Größe im vorgenannten Bereich liegt, kann vorteilhaft eine solche Porosität bzw. poröse Struktur in einem aus der erfindungsgemäßen Zusammensetzung erhaltenen Formköper eingestellt werden, die ein durchgehendes und insofern auch durchlässiges Porennetzwerk ermöglicht. Auf diese Weise können sowohl gewichtsoptimierte als auch - beispielsweise bei Verwendung als Materialverstärkung auf oder in einem textilen Substrat bzw. Textil - atmungsaktive Formkörper zur Verfügung gestellt werden, was mit bislang im Stand der Technik verfügbaren Zusammensetzungen bzw. Techniken so nicht möglich ist.

Gegenstand der vorliegenden Erfindung gemäß dem geltenden Aspekt ist damit insbesondere auch eine solche Zusammensetzung, insbesondere 3D-verdruckbare Zusammensetzung, vorzugsweise 3D-verdruckbare photoreaktive bzw. photohärtende Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis, insbesondere wie zuvor beschrieben,
welche folgenden Komponenten a) bis d) aufweist:
   a) ein flüssiges Harz,
   b) ein pulverförmiges Harz,
   c) einen photoreaktiven Verdünner,
   d) einen löslichen Füllstoff,
wobei die Komponenten a) bis c) gleiche reaktive Gruppen ausgewählt aus der Gruppe bestehend aus Acrylat, Acrylsäureester, Methacrylat, Methacrylsäureester, Acrylnitril, Styrol und deren Mischungen, insbesondere Acrylat, Acrylsäureester, Methacrylat, Methacrylsäureester und deren Mischungen, vorzugsweise Acrylsäureester, Methacrylsäureester und deren Mischungen, aufweisen,
wobei die Komponenten a) und b) die gleiche Basisstruktur aufweisen, vorzugsweise wobei die Basisstruktur eine Struktur aus Oligomeren, Prepolymeren und/oder Polymeren ausgewählt aus der Gruppe bestehend aus Urethan, Vinylester, Polyester, Acrylat und deren Mischungen, insbesondere Urethan, Acrylat und deren Mischungen, vorzugsweise Urethan, ist, und/oder
wobei die Komponente c) ein flüssiges reaktives Monomer, insbesondere ein flüssiges monofunktionelles Monomer, vorzugsweise ein flüssiges monofunktionelles Acrylsäureestermonomer, umfasst und/oder ist, und/oder
insbesondere wobei die Komponente c) photoreaktiv bei einer Wellenlänge in einem Bereich von 150 nm bis 600 nm, insbesondere 275 nm bis 525 nm, vorzugsweise 325 nm bis 475 nm, ist und/oder UV-reaktiv ist, und
wobei der Füllstoff (Komponente d)) in einem polaren Lösungsmittel löslich ist und in partikulärer, insbesondere kristalliner, Form, vorzugsweise in Form kristalliner Mikropartikel, vorliegt.

Für diese bevorzugte Ausgestaltung der erfindungsgemäßen Zusammensetzung gelten die gleichen Vorteile und Besonderheiten wie zuvor für die Zusammensetzung nach der vorliegenden Erfindung im Einzelnen erläutert.

Weiter im Hinblick auf die Komponente a) verhält es sich Rahmen der vorliegenden Erfindung bevorzugt wie folgt:
Erfindungsgemäß umfasst bzw. ist die Komponente a) ein flüssiges Harz. Diesbezüglich hat es sich weiter bewährt, wenn die Komponente a) ein flüssiges Acrylatharz, insbesondere ein flüssiges Urethanacrylatharz, vorzugsweise ein flüssiges aliphatisches Urethanacrylatharz, umfasst und/oder ist.

Vorzugsweise ist es dabei so, dass die Komponente a) bei einer Temperatur von 23 °C eine dynamische Viskosität in einem Bereich von weniger als 20.000 mPas, insbesondere weniger als 13.000 mPas, vorzugsweise weniger als 9.000 mPas, aufweist, und/oder dass die Komponente a) bei einer Temperatur von 23 °C eine dynamische Viskosität in einem Bereich von mehr als 1.000 mPas, insbesondere mehr als 4.000 mPas, vorzugsweise mehr als 6.000 mPas, aufweist.

Bevorzugt weist die die Komponente a) demnach bei einer Temperatur von 23 °C eine dynamische Viskosität in einem Bereich von 1.000 mPas bis 20.000 mPas, insbesondere 4.000 mPas bis 13.000 mPas, vorzugsweise 6.000 mPas bis 9.000 mPas, auf.

Es ist vorzugsweise vorgesehen, dass die Bestimmung der dynamischen Viskosität in Anlehnung an DIN EN ISO 3219 mittels Rotationsviskosimeter erfolgt.

Flüssige Acrylatharze bzw. insbesondere Urethanacrylatharze, die vorzugsweise aliphatisch sind, welche zudem insbesondere Viskositäten in den vorgenannten Bereichen aufweisen, gestatten es im Rahmen der Erfindung vorteilhaft, gezielt und bedarfsgenau die Viskosität der erfindungsgemäßen Zusammensetzung insgesamt zu modulieren. Auf diese Weise kann vorteilhaft eine gute Verarbeitbarkeit der Zusammensetzung mittels 3D-Druck ermöglicht werden. Darüber hinaus ist die Verwendung der genannten Harze auch vorteilhaft unter dem Gesichtspunkt der Einstellung bzw. Modulierung der Härte von aus der erfindungsgemäßen Zusammensetzung erhaltenen Formkörpern. Die Komponente a) vereint somit, in Verbindung mit den weiteren Komponenten b) und c), eine Doppelfunktion, indem diese sowohl die Steuerung der Eigenschaften der erfindungsgemäßen Zusammensetzung selbst als auch der Eigenschaften von daraus erhaltenen Formkörpern ermöglicht.

Geeignete, allgemein geläufige Beispiele für die Komponente a) sind dementsprechend etwa Ebecryl^{®} 1291, Ebecryl^{®} 4858, Ebecryl^{®} 4587, Ebecryl^{®} 8858, Ebecryl^{®} 4740, Ebecryl^{®} 4666, Ebecryl^{®} 4738, Ebecryl^{®} 220, Ebecryl^{®} 225, Ebecryl^{®} 4265, Ebecryl^{®} 4680, Ebecryl^{®} 5129, Ebecryl^{®} 4950, Ebecryl^{®} 4690, Ebecryl^{®} 8209 und/oder Ebecryl^{®} 4684.

Es hat sich dabei im Rahmen der Erfindung bewährt, wenn die Zusammensetzung die Komponente a) in Mengen in einem Bereich von weniger als 35 Gew.-%, insbesondere weniger als 25 Gew.-%, vorzugsweise weniger als 20 Gew.-%, bezogen auf die Gesamtzusammensetzung, aufweist, und/oder wenn die Zusammensetzung die Komponente a) in Mengen in einem Bereich von mehr als 5 Gew.-%, insbesondere mehr als 8 Gew.-%, vorzugsweise mehr als 12 Gew.-%, bezogen auf die Gesamtzusammensetzung, aufweist.

Bevorzugt weist die Zusammensetzung die Komponente a) also in Mengen in einem Bereich von 5 Gew.-% bis 35 Gew.-%, insbesondere 8 Gew.-% bis 25 Gew.-%, vorzugsweise 12 Gew.-% bis 20 Gew.-%, bezogen auf die Gesamtzusammensetzung, auf.

Wenn die Komponente a) in den vorgenannten Mengenbereichen in der erfindungsgemäßen Zusammensetzung eingesetzt wird, werden sowohl eine geeignete Viskosität der Gesamtzusammensetzung, insbesondere im Zusammenspiel mit den Komponenten b) und c), sowie eine zweckmäßig hohe Härte sowie gleichsam Flexibilität und Haltbarkeit von aus der Zusammensetzung erhaltenen Formkörpern erreicht.

Weiter speziell in Bezug auf die Komponente b) verhält es sich Rahmen der Erfindung bevorzugt wie folgt:
Im Rahmen der Erfindung ist vorgesehen, dass die Komponente b) ein pulverförmiges Harz umfasst bzw. ist.

Erfindungsgemäß meint pulverförmig, dass die Komponente b) insbesondere zumindest im Wesentlichen einen partikulären Feststoff umfasst bzw. ein partikulärer Feststoff ist.

Gleichermaßen kann es im Rahmen der Erfindung auch vorgesehen sein, dass die Komponente b) als Suspension eingesetzt wird, d.h. in Form einer Feststoff-Flüssigkeitsmischung. Dies kann vorteilhaft für die Einarbeitung der Komponente b) in die erfindungsgemäße Zusammensetzung sein. Wenn die Komponente b) als Suspension vorliegt, so hat es sich bewährt, wenn diese pastenförmig bzw. als Paste ausgebildet ist. Paste meint im Rahmen der Erfindung ein Feststoff-Flüssigkeitsgemisch (Suspension) mit einem hohen Gehalt an partikulärem Feststoff. Pasten sind bspw. nicht mehr fließfähig, sondern streichfest. Gleichermaßen kann es sein, dass die Komponente b) auch als, insbesondere zähflüssige, Flüssigkeit vorliegt. Dies kann bspw. durch Verdünnen einer pastenförmigen Suspension der Komponente b) erreicht werden.

Die Komponente b) kann in diesem Sinne bevorzugt auch ein pastenförmiges Harz umfassen oder sein. In dieser Verwendungsform ist ein homogenes Einarbeiten der Komponente b) in die Zusammensetzung in besonderem Maße möglich.

Vorzugsweise ist weiter vorgesehen, dass die Komponente b) ein pulverförmiges Acrylatharz, insbesondere ein pulverförmiges Urethanacrylatharz, vorzugsweise ein pulverförmiges oligomeres Urethanacrylatharz, bevorzugt in einer Mischung mit Acrylmonomeren ausgewählt ist aus der Gruppe bestehend aus Acrylat, Acrylsäureester, Methacrylat, Methacrylsäureester und deren Mischungen, umfasst und/oder ist.

In Kombination mit der Komponente a), die vorzugweise ein flüssiges Acrylatharz bzw. insbesondere Urethanacrylatharz, welches vorzugsweise aliphatisch ist, umfasst, kann im Rahmen der Erfindung bei Verwendung der vorgenannten bevorzugten Harze als Komponente b) eine Zusammensetzung bereitgestellt werden, die einerseits eine optimale Beschaffenheit, insbesondere im Hinblick auf die Aspekte Viskosität und Fließfähigkeit, für die Verwendung in 3D-Druckanwendungen aufweist.

Andererseits wird vorteilhaft eine schnell sowie gleichmäßig und vollständig härtbar ausgebildete Zusammensetzung bereitgestellt, die entsprechend im Rahmen von 3D-Druckapplikationen zügig gehärtet werden kann bzw. bei welcher die Initiierung und der Fortschritt des Härtungsprozesses sicher und zuverlässig erreicht werden können.

Hierfür sind die erfindungsgemäß bevorzugten Harze insoweit relevant, als dass diese eine im Rahmen der Erfindung vorteilhaft hohe, miteinander kompatible Reaktivität aufweisen, die ein gelichmäßiges Härten zuverlässig gestattet. Darüber hinaus kann auf Grundlage der für die Komponenten a) und b) bevorzugt verwendeten Harze vorteilhaft ein in sich homogener bzw. gleichförmiger Formkörper erhalten werden, der sich durch ein gleichmäßig bzw. kontinuierlich in dem Formkörper angelegtes bzw. verteiltes Eigenschaftsprofil auszeichnet. Dies ist besonders vorteilhaft, da so eine gleichbleibende und gezielt einstellbare sowie vorhersehbare Qualität des Formkörpers, insbesondere im Rahmen der Erzeugung in einem 3D-Druckprozess, realisiert werden kann.

Erfindungsgemäß hat es sich weiterhin bewährt, wenn die Komponente b) bei einer Temperatur von 60 °C eine dynamische Viskosität in einem Bereich von weniger als 70.000 mPas, insbesondere weniger als 55.000 mPas, vorzugsweise weniger als 48.000 mPas, aufweist, und/oder wenn die Komponente b) bei einer Temperatur von 60 °C eine dynamische Viskosität in einem Bereich von mehr als 10.000 mPas, insbesondere mehr als 15.000 mPas, vorzugsweise mehr als 19.000 mPas, aufweist.

Es ist im Rahmen der Erfindung also bevorzugt, wenn die Komponente b) bei einer Temperatur von 60 °C eine dynamische Viskosität in einem Bereich von 10.000 mPas bis 70.000 mPas, insbesondere 15.000 mPas bis 55.000 mPas, vorzugsweise 19.000 mPas bis 48.000 mPas, aufweist.

Die Bestimmung der dynamischen Viskosität erfolgt dabei wiederum vorzugsweise in Anlehnung an DIN EN ISO 3219 mittels Rotationsviskosimeter.

Geeignete, allgemein geläufige Beispiele für die Komponente b) sind dementsprechend etwa Ebecryl^{®} 1230, Ebecryl^{®} 4396, Ebecryl^{®} 250, Ebecryl^{®} 4397, Ebecryl^{®} 4155, Ebecryl^{®} 4250, Ebecryl^{®} 8894, Ebecryl^{®} 8896, Ebecryl^{®} 8413, Ebecryl^{®} 8409, Ebecryl^{®} 8429, Ebecryl^{®} 8813, Ebecryl^{®} 4491, Ebecryl^{®} 4857, Ebecryl^{®} 4513, Ebecryl^{®} 1271, Ebecryl^{®} 8890, Ebecryl^{®} 8411, Ebecryl^{®} 242N, HP6203, KOTIAN 3311W, KOTIAN 3290

In Kombination mit den Komponenten a) und c) gestattet die Komponente b), insbesondere wenn diese Viskositäten im vorgenannten Bereich aufweist, eine gezielte und bedarfsgerechte Einstellung der Gesamtviskosität der erfindungsgemäßen Zusammensetzung, so dass diese insbesondere für 3D-Druckverfahren geeignete Fließeigenschaften sowie gleichermaßen auch eine hinreichende Formstabilität im Zuge des Schichtauftrags aufweist.

Weiter hat es sich erfindungsgemäß bewährt, wenn die Zusammensetzung die Komponente b) in Mengen in einem Bereich von weniger als 35 Gew.-%, insbesondere weniger als 25 Gew.-%, vorzugsweise weniger als 20 Gew.-%, bezogen auf die Gesamtzusammensetzung, aufweist, und/oder wenn die Zusammensetzung die Komponente b) in Mengen in einem Bereich von mehr als 5 Gew.-%, insbesondere mehr als 8 Gew.-%, vorzugsweise mehr als 12 Gew.-%, bezogen auf die Gesamtzusammensetzung, aufweist.

Vorzugsweise weist die Zusammensetzung die Komponente b) also in Mengen in einem Bereich von 5 Gew.-% bis 35 Gew.-%, insbesondere 8 Gew.-% bis 25 Gew.-%, vorzugsweise 12 Gew.-% bis 20 Gew.-%, bezogen auf die Gesamtzusammensetzung, auf.

Wenn die Komponente b) in den vorgenannten Mengen in der erfindungsgemäßen Zusammensetzung eingesetzt wird, resultieren vorteilhaft aushärtbare sowie druckbare Zusammensetzungen, die sich sowohl auf Ebene der Zusammensetzung (optimale Fließfähigkeit sowie auch Formstabilität) als auch auf Ebene des aus der Zusammensetzung erhaltenen Formkörpers (zweckangepasste hohe Flexibilität und hohe strukturelle Integrität) durch bedarfsgerecht gezielt einstellbare, optimierte Anwendungseigenschaften auszeichnen.

Im Hinblick auf die Kombination der Komponenten a) und b) hat es sich erfindungsgemäß bewährt, wenn die Zusammensetzung die Komponenten a) und b) in Mengen in einem Bereich von weniger als 60 Gew.-%, insbesondere weniger als 45 Gew.-%, vorzugsweise weniger als 35 Gew.-%, bezogen auf die Gesamtzusammensetzung, aufweist, und/oder wenn die Zusammensetzung die Komponenten a) und b) in Mengen in einem Bereich von mehr als 10 Gew.-%, insbesondere mehr als 20 Gew.-%, vorzugsweise mehr als 25 Gew.-%, bezogen auf die Gesamtzusammensetzung, aufweist.

Vorteilhaft weist die Zusammensetzung die Komponenten a) und b) also in Mengen in einem Bereich von 10 Gew.-% bis 60 Gew.-%, insbesondere 20 Gew.-% bis 45 Gew.-%, vorzugsweise 25 Gew.-% bis 35 Gew.-%, bezogen auf die Gesamtzusammensetzung, auf.

Gleichermaßen werden im Rahmen der Erfindung gute Ergebnisse erhalten, wenn die Zusammensetzung die Komponenten a) und b) in einem gewichtsbezogenen Verhältnis in einem Bereich von 1:5 bis 5:1, insbesondere 1:2 bis 2:1, vorzugsweise 1 : 1,25 bis 1,25 : 1, aufweist.

In den vorgenannten Mengenbereichen bzw. -verhältnissen werden die zuvor beschriebenen Vorteile und besonderen technischen Eigenschaften der erfindungsgemäßen Zusammensetzung in besonderem Maße realisiert.

Was nun die Komponenten c) angelangt, so verhält es sich Rahmen der Erfindung diesbezüglich vorzugsweise wie folgt:
Wie bereits erwähnt, hat es sich für die Komponente c) im Rahmen der Erfindung generell bewährt, wenn die Komponente c) ein flüssiges reaktives Monomer umfasst und/oder ist. Bevorzugt weist das reaktive Monomer eine oder mehrere funktionelle (d. h. reaktive) Einheiten auf bzw. ist mono- oder multifunktionell ausgebildet. Bevorzugt werden monofunktionelle, bifunktionelle, trifunktionelle und/oder multifunktionelle reaktive Monomere eingesetzt, wobei monofunktionelle, bifunktionelle und/oder trifunktionelle reaktive Monomere bevorzugt sind. Die vorgenannten Monomere stellen vorteilhaft hohe Reaktivitäten und eine ausgeprägte Vernetzbarkeit sicher.

Geeignete, allgemein geläufige Beispiele für die Komponente c) sind etwa monofunktionelle reaktive Monomere wie Photomer 4141, Photomer 2812, Ebecryl^{®} 110, Ebecryl^{®} 113, Ebecryl^{®} 114, Ebecryl^{®} IBOA, Ebecryl^{®} 117, Pureomer 4012, bifunktionelle reaktive Monomere wie Photomer 4061, Photomer 4006, Ebecryl^{®} 11, Ebecryl^{®} 130, Ebecryl^{®} 145, Ebecryl^{®} MPDDA, DPGDA, HDDA, TPGDA, trifunktionelle reaktive Monomere wie Ebecryl^{®} 160, Ebecryl^{®} 853, Ebecryl^{®} 14, OTA 480, TMPTA, TMPTMA, oder multifunktionelle reaktive Monomere wie Ebecryl^{®} 40, Ebecryl^{®} 140, DPHA, PETIA.

Besonders bevorzugt ist es, wenn die Komponente c) ein flüssiges monofunktionelles Monomer, vorzugsweise ein flüssiges monofunktionelles Acrylsäureestermonomer, umfasst und/oder ist (vgl. genannte Beispiele).

Erfindungsgemäß ist weiter vorgesehen, dass die Komponente c) einen photoreaktiven Verdünner umfasst bzw. ein solcher ist. Erfindungsgemäß hat es sich dabei bewährt, wenn die Komponente c) ein flüssiges reaktives Monomer, insbesondere ein flüssiges monofunktionelles Monomer, vorzugsweise ein flüssiges monofunktionelles Acrylsäureestermonomer, mit einem Molekulargewicht in einem Bereich von weniger als 1.000 g/mol, insbesondere weniger als 500 g/mol, vorzugsweise weniger als 250 g/mol, umfasst und/oder ist, und/oder wenn die Komponente c) ein flüssiges reaktives Monomer, insbesondere ein flüssiges monofunktionelles Monomer, vorzugsweise ein flüssiges monofunktionelles Acrylsäureestermonomer, mit einem Molekulargewicht in einem Bereich von mehr als 75 g/mol, insbesondere mehr als 150 g/mol, vorzugsweise mehr als 175 g/mol, umfasst und/oder ist.

Vorzugsweise ist es also so, dass die Komponente c) ein flüssiges reaktives Monomer, insbesondere ein flüssiges monofunktionelles Monomer, vorzugsweise ein flüssiges monofunktionelles Acrylsäureestermonomer, mit einem Molekulargewicht in einem Bereich von 75 g/mol bis 1.000 g/mol, insbesondere 150 g/mol bis 500 g/mol, vorzugsweise 175 g/mol bis 250 g/mol, umfasst und/oder ist.

Wenn die Komponente c) wie zuvor beschrieben ausgewählt ist, kann eine im Rahmen der Erfindung vorteilhaft ausgeprägte Reaktivität der Komponente c) realisiert werden sowie gleichzeitig insbesondere auch eine zweckmäßige bzw. für den intendierten Anwendungszweck optimierte Verdünnungsleistung in Bezug auf die Viskosität und Fließeigenschaften der erfindungsgemäßen Zusammensetzung.

Auch zeichnet sich die Komponente c) dann durch ein optimales Durchdringungsvermögen aus, sodass vorteilhaft beständig bzw. stabil ausgebildete homogene Harzzusammensetzungen erhalten werden können.

Weiter hat es sich als vorteilhaft erwiesen, wenn die Komponente c) einen Naturstoff, insbesondere einen Pflanzenstoff, vorzugsweise ein Terpen, umfasst.

Besonders bevorzugt ist dieser Naturstoff ausgewählt aus der Gruppe der Borneole und ist ganz besonders bevorzugt Isoborneol bzw. von diesem abgeleitet.

Im Rahmen einer bevorzugten Ausführung der vorliegenden Erfindung umfasst und/oder ist die Komponente c) als photoreaktiven Verdünner bzw. weiter im Detail als flüssiges reaktives Monomer, insbesondere flüssiges monofunktionelles Monomer, vorzugsweise flüssiges monofunktionelles Acrylsäureestermonomer, also Isobornylacrylat, wie beispielsweise Ebecryl^{®} IBOA und/oder Pureomer 4012.

Derartige Acrylate, insbesondere Isobornylacrylat, weisen eine im Rahmen der Erfindung sehr vorteilhafte Photoreaktivität auf und können entsprechend vorteilhaft auf den Härtungsprozess wirken, sowohl im Hinblick auf die initiale Propagation der Härtungsreaktion als auch das möglichst vollständige Ablaufen des Härtungsprozesses als solchem.

Im Rahmen der Erfindung ist es weiter bevorzugt, wenn die Komponente c) bei einer Temperatur von 25 °C eine dynamische Viskosität in einem Bereich von weniger als 100 mPas, insbesondere weniger als 40 mPas, vorzugsweise weniger als 15 mPas, aufweist, und/oder wenn die Komponente c) bei einer Temperatur von 25 °C eine dynamische Viskosität in einem Bereich von mehr als 1 mPas, insbesondere mehr als 4 mPas, vorzugsweise mehr als 6 mPas, aufweist.

Vorzugsweise ist es also so, dass die Komponente c) bei einer Temperatur von 25 °C eine dynamische Viskosität in einem Bereich von 1 mPas bis 100 mPas, insbesondere 4 mPas bis 40 mPas, vorzugsweise 6 mPas bis 15 mPas, aufweist.

Die Bestimmung der dynamischen Viskosität erfolgt dabei vorzugsweise in Anlehnung an DIN EN ISO 3219 mittels Rotationsviskosimeter.

Wenn die Komponente c) die vorgenannten Viskositätseigenschaften aufweist, ist die Verdünnungsleistung besonders vorteilhaft ausgebildet und kann im Rahmen der Erfindung die Viskosität der Gesamtzusammensetzung im Zusammenspiel mit den Komponenten a) und b) besonders vorteilhaft bedarfsgenau und gezielt eingestellt werden.

Im Rahmen der Erfindung werden außerdem gute Ergebnisse erhalten, wenn die Zusammensetzung die Komponente c) in Mengen in einem Bereich von weniger als 80 Gew.-%, insbesondere weniger als 60 Gew.-%, vorzugsweise weniger als 50 Gew.-%, bezogen auf die Gesamtzusammensetzung, aufweist, und/oder wenn bei die Zusammensetzung die Komponente c) in Mengen in einem Bereich von mehr als 20 Gew.-%, insbesondere mehr als 30 Gew.-%, vorzugsweise mehr als 40 Gew.-%, bezogen auf die Gesamtzusammensetzung, aufweist.

Bevorzugt weist die Zusammensetzung die Komponente c) also in Mengen in einem Bereich von 20 Gew.-% bis 80 Gew.-%, insbesondere 30 Gew.-% bis 60 Gew.-%, vorzugsweise 40 Gew.-% bis 50 Gew.-%, bezogen auf die Gesamtzusammensetzung, auf.

Für erfindungsgemäße Zusammensetzungen, welche die Komponente c) in den vorgenannten Mengen aufweisen, können die zuvor beschriebenen Vorteile und technischen Besonderheiten, die mit der Zusammensetzung bzw. speziell der Komponente c) einhergehen, in besonderem Maße realisiert werden.

Bezüglich der Kombination der Komponenten a), b) und c) hat es sich im Rahmen der Erfindung insgesamt bewährt, wenn die Zusammensetzung die Komponenten a), b) und c) in Mengen in einem Bereich von weniger als 90 Gew.-%, insbesondere weniger als 85 Gew.-%, vorzugsweise weniger als 80 Gew.-%, bezogen auf die Gesamtzusammensetzung, aufweist, und/oder wenn die Zusammensetzung die Komponenten a), b) und c) in Mengen in einem Bereich von mehr als 40 Gew.-%, insbesondere mehr als 55 Gew.-%, vorzugsweise mehr als 65 Gew.-%, bezogen auf die Gesamtzusammensetzung, aufweist.

Vorzugsweise ist also vorgesehen, dass die Zusammensetzung die Komponenten a), b) und c) in Mengen in einem Bereich von 40 Gew.-% bis 90 Gew.-%, insbesondere 55 Gew.-% bis 85 Gew.-%, vorzugsweise 65 Gew.-% bis 80 Gew.-%, bezogen auf die Gesamtzusammensetzung, aufweist.

Zudem werden im Rahmen der Erfindung gute Ergebnisse erzielt, wenn die Zusammensetzung die Komponenten a) und b) sowie die Komponente c) in einem gewichtsbezogenen Verhältnis a) & b) : c) in einem Bereich von 0,25 : 1 bis 1,5 : 1, insbesondere 0,4 : 1 bis 1,25 : 1, vorzugsweise 0,5 : 1 bis 1 : 1, aufweist.

In den vorgenannten Mengenbereichen bzw. -verhältnissen werden für die erfindungsgemäße Zusammensetzung besonders optimierte Viskositäts- und Fließeigenschaften realisiert, so dass eine Zusammensetzung, die insbesondere für die Verwendung in 3D-Druckapplikationen optimiert ist, erhalten werden kann.

Weiter im Hinblick auf die Komponente d) gestaltet es sich Rahmen der Erfindung bevorzugt wie folgt:
Erfindungsgemäß ist der Füllstoff bzw. die Komponente d) in einem polaren Lösungsmittel löslich. Hier ist es vorzugsweise vorgesehen, dass das polare Lösungsmittel ausgewählt ist aus der Gruppe bestehend aus Wasser, Methanol, Ethanol, Isopropanol, Aceton, Acetonitril, Dimethylformamid, Dimethylsulfoxid und deren Mischungen, insbesondere Wasser, Methanol, Isopropanol, Aceton und deren Mischungen. Vorzugsweise ist das polare Lösungsmittel Wasser.

Es hat sich im Rahmen der Erfindung als vorteilhaft erwiesen, wenn die Komponente d) ausgewählt ist aus anorganischen Füllstoffen, organischen Füllstoffen und deren Mischungen, insbesondere wobei die Komponente d), insbesondere die anorganischen Füllstoffe, organischen Füllstoffe und deren Mischungen, wasserlöslich ist (sind), insbesondere eine Wasserlöslichkeit bei 20 °C von mehr als 200 g/L, insbesondere mehr als 250 g/L, vorzugsweise mehr als 325 g/L, aufweist(en).

Gute Ergebnisse werden dabei erhalten, wenn der anorganische Füllstoff ein Salz umfasst und/oder ist, insbesondere wobei das Salz ausgewählt ist aus der Gruppe bestehend aus Alkalihalogeniden, insbesondere Lithiumchlorid, Natriumfluorid, Natriumchlorid, Natriumbromid, Natriumiodid, Kaliumchlorid, Kaliumbromid und deren Mischungen, vorzugsweise Natriumchlorid, Kaliumchlorid und deren Mischungen, und/oder Erdalkalihalogeniden, insbesondere Magnesiumfluorid, Magnesiumchlorid, Magnesiumbromid, Magnesiumiodid, Calciumfluorid, Calciumchlorid, Calciumbromid, Calciumiodid und deren Mischungen, vorzugsweise Magnesiumchlorid, Calciumchlorid und deren Mischungen.

Vorzugsweise ist das Salz ausgewählt aus der Gruppe bestehend aus Natriumchlorid, Kaliumchlorid, Magnesiumchlorid, Calciumchlorid und deren Mischungen, insbesondere Natriumchlorid, Kaliumchlorid und deren Mischung.

Alternativ können auch Acetate von Alkalimetallen oder Harnstoff verwendet werden.

Im Rahmen der Erfindung sind hiervon auch Hydrate der vorgenannten Salze miterfasst.

Wenn der Füllstoff bzw. die Komponenten d) ein organischer Füllstoff ist, so hat es sich bewährt, wenn der organische Füllstoff Zucker und/oder Zuckeraustauschstoffe umfasst und/oder ist, insbesondere wobei der Zucker ausgewählt ist aus der Gruppe bestehend aus Rohrzucker, Rübenzucker, Baumzuckern, Xylit, Erythrit, Isomalt, Sorbit, Mannitol, Lactit, Maltit, Hagelzucker, Kristallzucker, Sandzucker, Kastorzucker, Puderzucker, Instantzucker und deren Mischungen.

Insbesondere ist der Zucker und/oder Zuckeraustauschstoffe ausgewählt aus der Gruppe bestehend aus Rohrzucker, Kristallzucker, Sandzucker, Kastorzucker, Puderzucker und deren Mischungen.

Füllstoffe, welche die vorgenannten Löslichkeitseigenschaften aufweisen oder aus den vorgenannten Substanzen ausgewählt sind, zeichnen sich durch eine im Rahmen der Erfindung optimale Mischbarkeit sowie insgesamt Kompatibilität mit den übrigen Zusammensetzungsbestandteilen aus, insbesondere auch im Hinblick auf die intendierte Verwendung der erfindungsgemäßen Zusammensetzung sowie die beabsichtigte Verarbeitungsweise der Zusammensetzung mittels 3D-Druck.

Wie bereits erwähnt, ist es im Rahmen der Erfindung generell auch bevorzugt, wenn der Füllstoff bzw. die Komponente d) eine mittlere Partikelgröße in einem Bereich von 0,1 µm bis 5.000 µm, insbesondere von 0,5 µm bis 2.500 µm, vorzugsweise 0,75 µm bis 2.000 µm, verstanden, insbesondere wobei die Bestimmung der Partikelgrößen in Anlehnung an DIN ISO 13320 mittels Laserbeugung erfolgt.

Vorteilhaft ist es somit im Rahmen der Erfindung möglich, die Porosität von aus der Zusammensetzung erhaltenen Formkörpern gezielt zu steuern, indem vorteilhaft die Art des Füllstoffs beispielsweise im Hinblick auf dessen mittlere Partikelgröße ausgewählt werden kann, insbesondere je nach Vorgabe, was für eine Porosität in dem finalen Formkörper eingestellt sein soll. Insbesondere sind im Rahmen der Erfindung auch inhomogene poröse Strukturen möglich, wenn beispielsweise Füllstoffe mit größerer und kleinerer mittlerer Partikelgröße gemischt werden. Auf diese Weise können vorteilhaft auch solche Porenstrukturen realisiert werden, die mit bislang zur Verfügung stehenden Verfahren nicht realisierbar sind.

Auch gestatten die vorgenannten Füllstoffe vorteilhaft eine stabile Einarbeitung in die erfindungsgemäße Zusammensetzung während gleichzeitig sichergestellt ist, dass keine unerwünschten Wechselwirkungen mit den Komponenten a) bis c) eintreten. Die erfindungsgemäßen Füllstoffe sind insoweit vorzugsweise also inert gegenüber den Komponenten a) bis c) und partizipieren entsprechend vorteilhaft nicht in Reaktionsprozessen im Rahmen der Härtung der erfindungsgemäßen Zusammensetzung. Gleichzeitig zeichnen sich die bevorzugten Füllstoffe durch optimale Löslichkeitseigenschaften aus, so dass die Erzeugung poröser Strukturen möglich wird, welche sich insbesondere auch in das Innere des Formkörpers erstrecken bzw. durchgehend durch den Formkörper ausgebildet sind. Auf Basis der erfindungsgemäß bevorzugten Füllstoffe kann also zuverlässig und reproduzierbare ein insbesondere offenporiges sowie kontinuierliches Porennetzwerk in einem Formkörper auf Harzbasis erzeugt werden, insbesondere wobei dieser Formköper mittels 3D-Druck erzeugt werden kann.

Die vorgenannten bevorzugten Füllstoffe sind dabei für die bevorzugt vorgesehene 3D-Verdruckbarkeit der erfindungsgemäßen Zusammensetzung insoweit optimiert, als dass diese die Fließeigenschaften bzw. die Viskosität der Zusammensetzung positiv komplementieren und außerdem auch die Klebrigkeit der Zusammensetzung vorteilhaft so reduzieren, dass eine gute Verdruckbarkeit gewährleistet werden kann, während gleichzeitig sichergestellt ist, dass die Zusammensetzung hinreichend sicher durch eine 3D-Druckvorrichtung geleitet werden kann, ohne diese zu blockieren oder dergleichen. Entsprechend kann insgesamt von einem sehr vorteilhaften Zusammenwirken der Komponenten a) bis d) im Hinblick auf die Anwendungseigenschaften der erfindungsgemäßen Zusammensetzung ausgegangen werden.

Im Rahmen der Erfindung hat es sich dabei bewährt, wenn die Zusammensetzung die Komponente d) in Mengen in einem Bereich von weniger als 50 Gew.-%, insbesondere weniger als 40 Gew.-%, vorzugsweise weniger als 30 Gew.-%, bezogen auf die Gesamtzusammensetzung, aufweist, und/oder wenn die Zusammensetzung die Komponente d) in Mengen in einem Bereich von mehr als 10 Gew.-%, insbesondere mehr als 15 Gew.-%, vorzugsweise mehr als 20 Gew.-%, bezogen auf die Gesamtzusammensetzung, aufweist.

Vorzugsweise ist es also so, dass die Zusammensetzung die Komponente d) in Mengen in einem Bereich von 10 Gew.-% bis 50 Gew.-%, insbesondere 15 Gew.-% bis 40 Gew.-%, vorzugsweise 20 Gew.-% bis 30 Gew.-%, bezogen auf die Gesamtzusammensetzung, aufweist.

Die zuvor beschriebenen Vorteile werden dann in besonderem Maße realisiert.

Was nun die Kombination der Komponenten a) bis d) anbelangt, so werden im Rahmen der Erfindung gute Ergebnisse erzielt, wenn die Zusammensetzung die Komponenten a) und b) sowie die Komponente d) in einem gewichtsbezogenen Verhältnis a) & b) : d) in einem Bereich von 2 : 1 bis 1 : 1,25, insbesondere 1,5 : 1 bis 1 : 1, vorzugsweise 1,35 : 1 bis 1,1 : 1, aufweist.

Ebenfalls werden gute Ergebnisse erzielt, wenn die Zusammensetzung die Komponenten a), b) und c) sowie die Komponente d) in einem gewichtsbezogenen Verhältnis a), b) & c) : d) in einem Bereich von 7 : 1 bis 1,5 : 1, insbesondere 5 : 1 bis 1,75 : 1, vorzugsweise 3,5 : 1 bis 2,5 : 1, aufweist.

Weiterhin hat es sich als vorteilhaft erwiesen, wenn die Zusammensetzung aufweisend die Komponenten a) bis d) bei einer Temperatur von 23 °C eine dynamische Viskosität in einem Bereich von weniger als 5.000 mPas, insbesondere weniger als 2.500 mPas, vorzugsweise weniger als 1.750 mPas, aufweist, und/oder wenn die Zusammensetzung aufweisend die Komponenten a) bis d) bei einer Temperatur von 23 °C eine dynamische Viskosität in einem Bereich von mehr als 700 mPas, insbesondere mehr als 1.250 mPas, vorzugsweise mehr als 1.400 mPas, aufweist.

Bevorzugt ist es also so, dass die Zusammensetzung aufweisend die Komponenten a) bis d) bei einer Temperatur von 23 °C eine dynamische Viskosität in einem Bereich von 700 mPas bis 5.000 mPas, insbesondere 1.250 mPas bis 2.500 mPas, vorzugsweise 1.400 mPas bis 1.750 mPas, aufweist.

Die Bestimmung der dynamischen Viskosität erfolgt wiederum bevorzugt in Anlehnung an DIN EN ISO 3219 mittels Rotationsviskosimeter.

Wenn die erfindungsgemäße Zusammensetzung Viskositäten im vorgenannten Bereich aufweist, ist eine besonders vorteilhafte 3D-Verdurckbarkeit zuverlässig gegeben. Entsprechende Zusammensetzungen zeichnen sich durch für den intendierten Verwendungszweck sehr geeignete Viskositäts- und Fließeigenschaften aus, während gleichzeitig hinreichend formstabile Schichten gedruckt werden können, so dass insgesamt auch hinreichend stabile 3D-gedruckt Gebilde bzw. Formkörper aus der Zusammensetzung erhalten werden können.

Die genannten bevorzugten Viskositäten und damit assoziierten Vorteile können im Rahmen der Erfindung vorteilhaft insbesondere realisiert werden, wenn Mengenbereiche und -verhältnisse, wie für die Kombination der Komponenten angegeben, für die erfindungsgemäße Zusammensetzung verwendet werden.

Gegenstand der vorliegenden Erfindung gemäß dem geltenden Aspekt ist somit insbesondere auch eine solche Zusammensetzung, insbesondere 3D-verdruckbare Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis, insbesondere wie zuvor beschrieben,
welche die folgenden Komponenten a) bis d) aufweist:
   a) ein flüssiges Harz,
   b) ein pulverförmiges Harz,
   c) einen photoreaktiven Verdünner,
   d) einen löslichen Füllstoff,
wobei die Komponenten a) bis c) gleiche reaktive Gruppen aufweisen, und wobei der Füllstoff (Komponente d)) in einem polaren Lösungsmittel löslich ist, und
wobei die Zusammensetzung die Komponente a) in Mengen in einem Bereich von 5 Gew.-% bis 35 Gew.-%, insbesondere 8 Gew.-% bis 25 Gew.-%, vorzugsweise 12 Gew.-% bis 20 Gew.-%, und/oder
die Komponente b) in Mengen in einem Bereich von 5 Gew.-% bis 35 Gew.-%, insbesondere 8 Gew.-% bis 25 Gew.-%, vorzugsweise 12 Gew.-% bis 20 Gew.-%, und/oder
die Komponente c) in Mengen in einem Bereich von 20 Gew.-% bis 80 Gew.-%, insbesondere 30 Gew.-% bis 60 Gew.-%, vorzugsweise 40 Gew.-% bis 50 Gew.-%, und/oder
die Komponente d) in Mengen in einem Bereich von 10 Gew.-% bis 50 Gew.-%, insbesondere 15 Gew.-% bis 40 Gew.-%, vorzugsweise 20 Gew.-% bis 30 Gew.-%, jeweils bezogen auf die Gesamtzusammensetzung, aufweist.

Für diese bevorzugte Ausgestaltung der erfindungsgemäßen Zusammensetzung gelten die gleichen Vorteile und Besonderheiten wie zuvor für die Zusammensetzung nach der vorliegenden Erfindung im Einzelnen erläutert.

Gegenstand der vorliegenden Erfindung gemäß dem geltenden Aspekt ist zudem insbesondere auch eine solche Zusammensetzung, insbesondere 3D-verdruckbare Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis, insbesondere wie zuvor beschrieben,
welche die folgenden Komponenten a) bis d) aufweist:
   a) ein flüssiges Harz,
   b) ein pulverförmiges Harz,
   c) einen photoreaktiven Verdünner,
   d) einen löslichen Füllstoff,
wobei die Komponenten a) bis c) gleiche reaktive Gruppen aufweisen, und wobei der Füllstoff (Komponente d)) in einem polaren Lösungsmittel löslich ist, und
wobei die Zusammensetzung die Komponenten a) und b) in einem gewichtsbezogenen Verhältnis in einem Bereich von 1 : 5 bis 5 : 1, insbesondere 1 : 2 bis 2 : 1, vorzugsweise 1 : 1,25 bis 1,25 : 1, aufweist, und/oder
insbesondere wobei die Zusammensetzung die Komponenten a) und b) sowie die Komponente c) in einem gewichtsbezogenen Verhältnis a) & b) : c) in einem Bereich von 0,25 : 1 bis 1,5 : 1, insbesondere 0,4 : 1 bis 1,25 : 1, vorzugsweise 0,5 : 1 bis 1 : 1, aufweist, und/oder
insbesondere wobei die Zusammensetzung die Komponenten a) und b) sowie die Komponente d) in einem gewichtsbezogenen Verhältnis a) & b) : d) in einem Bereich von 2 : 1 bis 1 : 1,25, insbesondere 1,5 : 1 bis 1 : 1, vorzugsweise 1,35 : 1 bis 1,1 : 1, aufweist, und/oder
insbesondere wobei die Zusammensetzung die Komponenten a), b) und c) sowie die Komponente d) in einem gewichtsbezogenen Verhältnis a), b) & c) : d) in einem Bereich von 7 : 1 bis 1,5 : 1, insbesondere 5 : 1 bis 1,75 : 1, vorzugsweise 3,5 : 1 bis 2,5 : 1, aufweist.

Für diese bevorzugte Ausgestaltung der erfindungsgemäßen Zusammensetzung gelten die gleichen Vorteile und Besonderheiten wie zuvor für die Zusammensetzung nach der vorliegenden Erfindung im Einzelnen erläutert.

Gemäß einer bevorzugten Ausführung der vorliegenden Erfindung ist darüber hinaus gemäß dem geltenden Aspekt auch Gegenstand der vorliegenden Erfindung eine solche Zusammensetzung, insbesondere 3D-verdruckbare Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis, insbesondere wie zuvor beschrieben,
welche die folgenden Komponenten a) bis d) aufweist:
   a) ein flüssiges Harz,
   b) ein pulverförmiges Harz,
   c) einen photoreaktiven Verdünner,
   d) einen löslichen Füllstoff,
wobei die Komponenten a) bis c) gleiche reaktive Gruppen aufweisen, und wobei der Füllstoff (Komponente d)) in einem polaren Lösungsmittel löslich ist, und
wobei die Zusammensetzung die Komponente a) in Mengen in einem Bereich von 5 Gew.-% bis 35 Gew.-%, insbesondere 8 Gew.-% bis 25 Gew.-%, vorzugsweise 12 Gew.-% bis 20 Gew.-%,
die Komponente b) in Mengen in einem Bereich von 5 Gew.-% bis 35 Gew.-%, insbesondere 8 Gew.-% bis 25 Gew.-%, vorzugsweise 12 Gew.-% bis 20 Gew.-%, die Komponente c) in Mengen in einem Bereich von 20 Gew.-% bis 80 Gew.-%, insbesondere 30 Gew.-% bis 60 Gew.-%, vorzugsweise 40 Gew.-% bis 50 Gew.-%, und
die Komponente d) in Mengen in einem Bereich von 10 Gew.-% bis 50 Gew.-%, insbesondere 15 Gew.-% bis 40 Gew.-%, vorzugsweise 20 Gew.-% bis 30 Gew.-%, jeweils bezogen auf die Gesamtzusammensetzung, aufweist; und
wobei die Zusammensetzung die Komponenten a) und b) in einem gewichtsbezogenen Verhältnis in einem Bereich von 1 : 5 bis 5 : 1, insbesondere 1 : 2 bis 2 : 1, vorzugsweise 1 : 1,25 bis 1,25 : 1, aufweist, und
insbesondere wobei die Zusammensetzung die Komponenten a) und b) sowie die Komponente c) in einem gewichtsbezogenen Verhältnis a) & b) : c) in einem Bereich von 0,25 : 1 bis 1,5 : 1, insbesondere 0,4 : 1 bis 1,25 : 1, vorzugsweise 0,5 : 1 bis 1 : 1, aufweist, und/oder
insbesondere wobei die Zusammensetzung die Komponenten a) und b) sowie die Komponente d) in einem gewichtsbezogenen Verhältnis a) & b) : d) in einem Bereich von 2 : 1 bis 1 : 1,25, insbesondere 1,5 : 1 bis 1 : 1, vorzugsweise 1,35 : 1 bis 1,1 : 1, aufweist, und/oder
insbesondere wobei die Zusammensetzung die Komponenten a), b) und c) sowie die Komponente d) in einem gewichtsbezogenen Verhältnis a), b) & c) : d) in einem Bereich von 7 : 1 bis 1,5 : 1, insbesondere 5 : 1 bis 1,75 : 1, vorzugsweise 3,5 : 1 bis 2,5 : 1, aufweist.

Für diese bevorzugte Ausgestaltung der erfindungsgemäßen Zusammensetzung gelten die gleichen Vorteile und Besonderheiten wie zuvor für die Zusammensetzung nach der vorliegenden Erfindung im Einzelnen erläutert.

In einer bevorzugten Ausführung der vorliegenden Erfindung kann es vorgesehen sein, dass die erfindungsgemäße Zusammensetzung weitere Komponenten umfasst.

Gemäß einer bevorzugten Ausführung der vorliegenden Erfindung hat es sich bewährt, wenn die Zusammensetzung als weitere Komponente e) ein Dispersions- und Feuchthaltemittel aufweist.

Besonders geeignet sind niedermolekulare, insbesondere netto-negativ geladene Dispersions- und Feuchthaltemittel, wie beispielsweise Ebecryl^{®} 350, Ebecryl^{®} 1360, Ebecryl^{®} 331, ADDITOL^{®} XL 6577, Borchi^{®} Gen AP, Borchi^{®} Gen ND, Borchi^{®} Gen 0650.

Entsprechende Dispersions- und Feuchthaltemittel können Füllstoffe, wie im Rahmen der Erfindung die Komponente d) bzw. für diese bevorzugt vorgesehen, in Zusammensetzungen mit Komponenten a) bis c), wie im Rahmen der Erfindung vorgesehen bzw. bevorzugt verwendet, wirkungsvoll stabilisieren. Somit können vorteilhaft insgesamt stabilere, insbesondere sedimentationsstabilisierte, Zusammensetzungen bereitgestellt werden.

Wenn die erfindungsgemäße Zusammensetzung eine Komponente e) aufweist, so hat es sich bewährt, wenn die Zusammensetzung die Komponente e) in Mengen in einem Bereich von 1 Gew.-% bis 10 Gew.-%, insbesondere 2,5 Gew.-% bis 7,5 Gew.-%, vorzugsweise 3 Gew.-% bis 6 Gew.-%, bezogen auf die Gesamtzusammensetzung, aufweist.

Darüber hinaus ist es bevorzugt vorgesehen, dass die Komponente e) bei einer Temperatur von 23 °C eine dynamische Viskosität in einem Bereich von 100 mPas bis 1.000 mPas, insbesondere 150 mPas bis 750 mPas, vorzugsweise 175 mPas bis 550 mPas, aufweist.

Die Bestimmung der dynamischen Viskosität erfolgt wiederum bevorzugt in Anlehnung an DIN EN ISO 3219 mittels Rotationsviskosimeter.

Komponenten e) mit den vorgenannten Eigenschaften zeichnen sich vorteilhaft durch eine optimale Kompatibilität mit den weiteren Komponenten a) bis d) aus und tragen zu den vorteilhaften Verarbeitungseigenschaften erfindungsgemäßer Zusammensetzungen insbesondere für die intendierte Anwendung in 3D-Druckapplikationen bei.

Gegenstand der vorliegenden Erfindung gemäß dem geltenden Aspekt ist somit insbesondere auch eine solche Zusammensetzung, insbesondere 3D-verdruckbare Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis, insbesondere wie zuvor beschrieben,
welche die folgenden Komponenten a) bis e) aufweist:
   a) ein flüssiges Harz,
   b) ein pulverförmiges Harz,
   c) einen photoreaktiven Verdünner,
   d) einen löslichen Füllstoff,
   e) ein Dispersions- und Feuchthaltemittel,
wobei die Komponenten a) bis c) gleiche reaktive Gruppen aufweisen, und wobei der Füllstoff (Komponente d)) in einem polaren Lösungsmittel löslich ist,
insbesondere wobei die Zusammensetzung die Komponente e) in Mengen in einem Bereich von 1 Gew.-% bis 10 Gew.-%, insbesondere 2,5 Gew.-% bis 7,5 Gew.-%, vorzugsweise 3 Gew.-% bis 6 Gew.-%, bezogen auf die Gesamtzusammensetzung, aufweist.

Für diese bevorzugte Ausgestaltung der erfindungsgemäßen Zusammensetzung gelten die gleichen Vorteile und Besonderheiten wie zuvor für die Zusammensetzung nach der vorliegenden Erfindung im Einzelnen erläutert.

Darüber hinaus kann es im Rahmen der vorliegenden Erfindung auch vorgesehen sein, dass die Zusammensetzung als weitere Komponente f) ein Initiator aufweist, insbesondere wobei die Komponente f) einen Photoinitiator umfasst und/oder ein Photoinitiator ist, vorzugsweise wobei die Komponente f) einen Organophosphor-Photoinitiator umfasst und/oder ein Organophosphor-Photoinitiator ist.

Besonders bevorzugt sind im Rahmen der Erfindung Monoacylphosphinoxid-Photoinitiatoren, insbesondere beispielsweise Diphenyl(2,4,6-trimethylbenzoyl)phosphinoxid. Geeignete Produkte sind etwa TPO-L, Omnirad 2100, Omnipol TP, Omnirad TPO.

Die vorgenannten Initiatoren zeichnen sich durch eine im Rahmen der Erfindung und insbesondere bezüglich der Verwendung in 3D-Druckapplikationen vorteilhafte Reaktivität bzw. Aktivierung, insbesondere durch Bestrahlung bzw. Lichteinwirkung aus. Dies trifft vorteilhaft insbesondere zu, wenn das Bestrahlen mit Licht einer Wellenlänge im Bereich von 150 nm bis 600 nm, insbesondere 275 nm bis 525 nm, vorzugsweise 325 nm bis 475 nm, durchgeführt wird. Insoweit ist es im Rahmen der vorliegenden Erfindung vorzugsweise vorgesehen, dass die Komponente f) bzw. der Initiator ein(en) UV-Photoinitiator ist bzw. umfasst.

Entsprechend können erfindungsgemäße Zusammensetzungen, welche eine Komponente f) wie zuvor beschrieben aufweisen, vorteilhaft effizient sowie innerhalb kurzer Zeit mittels Bestrahlung zum Härten angeregt werden, was insbesondere für die intendierte Anwendung in 3D-Druckapplikationnen vorteilhaft ist und hier einen vergleichsweise zügigen Ablauf des 3D-Druckvorgangs gestattet.

Wenn die erfindungsgemäße Zusammensetzung eine Komponente f) umfasst, so hat es sich bewährt, wenn die Zusammensetzung die Komponente f) in Mengen in einem Bereich von 0,01 Gew.-% bis 1 Gew.-%, insbesondere 0,1 Gew.-% bis 0,75 Gew.-%, vorzugsweise 0,25 Gew.-% bis 0,6 Gew.-%, bezogen auf die Gesamtzusammensetzung, aufweist.

Gegenstand der vorliegenden Erfindung gemäß dem geltenden Aspekt ist somit insbesondere auch eine solche Zusammensetzung, insbesondere 3D-verdruckbare Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis, insbesondere wie zuvor beschrieben,
welche die folgenden Komponenten a) bis f) aufweist:
   a) ein flüssiges Harz,
   b) ein pulverförmiges Harz,
   c) einen photoreaktiven Verdünner,
   d) einen löslichen Füllstoff,
   e) ein Dispersions- und Feuchthaltemittel,
   f) ein Initiator
wobei die Komponenten a) bis c) gleiche reaktive Gruppen aufweisen, und wobei der Füllstoff (Komponente d)) in einem polaren Lösungsmittel löslich ist,
insbesondere wobei die Zusammensetzung die Komponente f) in Mengen in einem Bereich von 0,01 Gew.-% bis 1 Gew.-%, insbesondere 0,1 Gew.-% bis 0,75 Gew.-%, vorzugsweise 0,25 Gew.-% bis 0,6 Gew.-%, bezogen auf die Gesamtzusammensetzung, aufweist.

Für diese bevorzugte Ausgestaltung der erfindungsgemäßen Zusammensetzung gelten die gleichen Vorteile und Besonderheiten wie zuvor für die Zusammensetzung nach der vorliegenden Erfindung im Einzelnen erläutert.

Vorzugsweise ist es im Rahmen der vorliegenden Erfindung für die erfindungsgemäße Zusammensetzung nicht zuletzt so, dass die Zusammensetzung aufweisend die Komponenten a) bis d) und e) und/oder f) bei einer Temperatur von 23 °C eine dynamische Viskosität in einem Bereich von weniger als 5.000 mPas, insbesondere weniger als 2.500 mPas, vorzugsweise weniger als 1.750 mPas, aufweist, und/oder dass die Zusammensetzung aufweisend die Komponenten a a) bis d) und e) und/oder f) bei einer Temperatur von 23 °C eine dynamische Viskosität in einem Bereich von mehr als 700 mPas, insbesondere mehr als 1.250 mPas, vorzugsweise mehr als 1.400 mPas, aufweist.

Bevorzugt weist die Zusammensetzung aufweisend die Komponenten a) bis d) und e) und/oder f) also bei einer Temperatur von 23 °C eine dynamische Viskosität in einem Bereich von 700 mPas bis 5.000 mPas, insbesondere 1.250 mPas bis 2.500 mPas, vorzugsweise 1.400 mPas bis 1.750 mPas, auf.

Die Bestimmung der dynamischen Viskosität erfolgt wiederum bevorzugt in Anlehnung an DIN EN ISO 3219 mittels Rotationsviskosimeter.

Die besonderen Vorteile und technischen Besonderheiten, die für erfindungsgemäße Zusammensetzungen mit den vorgenannten Viskositäten realisiert werden, sind bereits zuvor beschrieben worden und gelten für die bevorzugte Ausführung der Erfindung in Form einer Zusammensetzung aufweisend die Komponenten a) bis d) und e) und/oder f) gleichermaßen.

Weiterer Gegenstand der vorliegenden Erfindung - gemäß einem **zweiten** Aspekt der vorliegenden Erfindung - ist ein Verfahren zur Herstellung einer Zusammensetzung, insbesondere einer 3D-verdruckbaren Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis, insbesondere einer Zusammensetzung wie zuvor beschrieben,
wobei das Verfahren die folgenden Schritte umfasst:
   i) Vorlegen und Erwärmen eines pulverförmigen Harzes, insbesondere gemäß Komponente b),
   ii) Schrittweises Hinzugeben eines flüssigen Harzes, insbesondere gemäß Komponente a), sowie eines photoreaktiven Verdünners, insbesondere gemäß Komponente c),
   iii) Erzeugen einer homogenen Mischung,
   iv) Hinzugeben eines löslichen Füllstoffes, insbesondere gemäß Komponente d),
wobei die in den Schritten i) bis iii) verwendeten Substanzen, insbesondere die Komponenten a) bis c), gleiche reaktive Endgruppen aufweisen, und wobei der Füllstoff (Komponente d)) in einem polaren Lösungsmittel löslich ist.

Das erfindungsgemäße Verfahren erlaubt vorteilhaft eine effiziente sowie unkomplizierte und insoweit anwenderfreundliche Bereitstellung einer Zusammensetzung, insbesondere wie zuvor beschrieben. Insbesondere gestattet das Verfahren die unkomplizierte Bereitstellung einer 3D-verdruckbaren Harzzusammensetzung, die unmittelbar als solche in 3D-Druckverfahren eingesetzt werden kann.

Gemäß einer bevorzugten Ausführung des erfindungsgemäßen Verfahrens kann es dabei vorgesehen sein, dass in Verfahrensschritt ii) außerdem ein Dispersions- und Feuchthaltemittel, insbesondere gemäß Komponente e), hinzugegeben wird.

Im Rahmen einer weiter bevorzugten Ausführung des erfindungsgemäßen Verfahrens kann es zudem vorgesehen sein, dass in Verfahrensschritt ii) außerdem ein Initiator, insbesondere gemäß Komponente f), hinzugegeben wird.

Was nun den Verfahrensschritt i) anbelangt, so hat es sich im Rahmen der Erfindung bewährt, wenn das Erwärmen in Verfahrensschritt i) bei einer Temperatur in einem Bereich von 28 °C bis 75 °C, insbesondere 33 °C bis 60 °C, vorzugsweise 37 °C bis 50 °C, durchgeführt wird.

Darüber hinaus hat es sich auch bewährt, wenn das Erwärmen in Verfahrensschritt i) über eine Zeitdauer von 1 min bis 5 h, insbesondere 30 min bis 4 h, vorzugsweise 45 min bis 3 h, durchgeführt wird.

Darüber hinaus werden im Rahmen des erfindungsgemäßen Verfahrens gute Ergebnisse erzielt, wenn das Erzeugen der homogenen Mischung durch Rühren, Schütteln, Schleudern, insbesondere Rühren, vorgenommen wird.

Nicht zuletzt hat es sich im Rahmen der Erfindung als vorteilhaft erwiesen, wenn die Verfahrensschritte ii) bis iv) ebenfalls bei einer Temperatur in einem Bereich von 18 °C bis 65 °C, insbesondere 20 °C bis 55 °C, vorzugsweise 22 °C bis 50 °C, durchgeführt werden.

Insgesamt stellt die vorliegende Erfindung damit ein unkompliziertes sowie flexibel anwendbares Verfahren zur Herstellung einer Kunstharzzusammensetzung, die insbesondere 3D-verdruckbar ausgebildet ist sowie sich insbesondere zur Erzeugung poröser Formkörper eignet, bereit.

Für weitergehende Einzelheiten zu diesem Erfindungsaspekt kann auf die obigen Ausführungen zur erfindungsgemäßen Zusammensetzung verwiesen werden, welche in Bezug auf das erfindungsgemäße Verfahren entsprechend gelten.

Weiterer Gegenstand der vorliegenden Erfindung - gemäß einem **dritten** Aspekt der vorliegenden Erfindung - ist die Verwendung einer Zusammensetzung, wie zuvor beschrieben bzw. wie nach dem zuvor beschriebenen erfindungsgemäßen Herstellungsverfahren erhalten, in einem Verfahren zur Herstellung 3D-gedruckter, insbesondere poröser, Formkörper und/oder von mit 3D-gedruckten, insbesondere porösen, Formkörpern ausgestatteten Substraten.

In diesem Sinne auch Gegenstand der vorliegenden Erfindung ist die Verwendung einer Zusammensetzung, wie zuvor beschrieben bzw. wie nach dem zuvor beschriebenen erfindungsgemäßen Herstellungsverfahren erhalten und/oder erhältlich, für 3D-gedruckte, insbesondere poröse, Formkörper und/oder als Ausgangsmasse für 3D-gedruckte, insbesondere poröse, Formkörper.

Für weitergehende Einzelheiten zu diesem Erfindungsaspekt kann auf die obigen Ausführungen zu den übrigen Aspekten der vorliegenden Erfindung verwiesen werden, welche in Bezug auf den vorliegenden Aspekt entsprechend gelten.

Weiterer Gegenstand der vorliegenden Erfindung - gemäß einem **vierten** Aspekt der vorliegenden Erfindung - ist ein Verfahren, insbesondere 3D-Druckverfahren, zur Herstellung 3D-gedruckter, insbesondere poröser, Formkörper und/oder von mit 3D-gedruckten, insbesondere porösen, Formkörpern ausgestatteten Substraten,
wobei das Verfahren die folgenden Schritte umfasst:
I) Vorlegen einer, insbesondere 3D-verdruckbaren, Zusammensetzung, insbesondere wie zuvor beschrieben und/oder erhalten nach einem Herstellungsverfahren wie zuvor beschrieben, auf Kunstharzbasis, wobei die Zusammensetzung die folgenden Komponenten a) bis d) aufweist:
   a) ein flüssiges Harz,
   b) ein pulverförmiges Harz,
   c) einen photoreaktiven Verdünner,
   d) einen löslichen Füllstoff,
   wobei die Komponenten a) bis c) gleiche reaktive Endgruppen aufweisen, und wobei der Füllstoff (Komponente d)) in einem polaren Lösungsmittel löslich ist,
II) Drucken einer ersten Schicht der Zusammensetzung auf einem Substrat und/oder einem temporären Träger,
III) optional Bestrahlen der Schicht der Zusammensetzung unter teilweiser Härtung der Zusammensetzung,
IV) Drucken weiterer Schichten der Zusammensetzung unter Ausbildung weiterer Schichten der Zusammensetzung,
V) optional Bestrahlen der Schichten der Zusammensetzung, insbesondere nach jedem Druckschritt, unter teilweiser Härtung der Zusammensetzung, wobei die Schritte IV) und V) wiederholt werden, bis der Formkörper erhalten ist,
VI) abschließendes Bestrahlen des Formkörpers aus der Zusammensetzung unter vollständiger Aushärtung der Zusammensetzung.

Mit dem erfindungsgemäßen Verfahren zur Herstellung 3D-gedruckter, insbesondere poröser, Formkörper und/oder von mit 3D-gedruckten, insbesondere porösen, Formkörpern ausgestatteten Substraten wird vorteilhaft eine unkomplizierte, anwenderfreundliche und flexibel umzusetzende Lösung für die Herstellung von Formkörpern, die beispielsweise als Materialverstärkungen in bzw. auf textilen Substraten vorgesehen sein können, bereitgestellt.

Insbesondere kann das erfindungsgemäße Verfahren auf herkömmlichen 3D-Druckern durchgeführt werden, wobei insbesondere lediglich sichergestellt sein braucht, dass der Drucker eine geeignete Einrichtung, insbesondere einen Druckkopf, zur Förderung von viskosen Materialien aufweist. Um positionsgenaue Drucke auf bspw. textilen Substraten zu ermöglichen, kann auf das Substrat fixierende Einrichtung verwendet werden. Das Textil kann bspw. zwischen zwei Acrylglasplatten eingespannt werden, von denen die dem Druckkopf zugewandte Platte eine Aussparung in der Größe des Druckbereichs aufweist. Die Platte kann durch Schrauben fixiert werden. Denkbar wären auch Klammern, um den Feststellaufwand zu verringern. Darüber hinaus ist neben den gängigen Ausstattungsmerkmalen von 3D-Druckern lediglich auch eine Einrichtung zur Bestrahlung des Druckbetts erforderlich, wobei entsprechende Einrichtungen regelmäßig in verfügbaren 3D-Druckern vorgesehen sind. Entsprechend schlägt die vorliegende Erfindung ein breit anwendbares und praktisch unkompliziertes Verfahren vor, dass auf entsprechend vorteilhafte Weise Zugang zu insbesondere porösen Formkörpern bzw. mit diesen bedruckten Substraten liefert, die so bislang nicht zugänglich sind.

Hierfür ist insbesondere die im Rahmen des Verfahrens eingesetzte Zusammensetzung, insbesondere nach der vorliegenden Erfindung, wesentlich. Diesbezüglich vorteilhaft herauszustellen ist gleichermaßen die hohe Kompatibilität und unkomplizierte Verarbeitbarkeit der verwendeten Zusammensetzung, die sich insgesamt durch für den intendierten Anwendungszweck optimierte Anwendungseigenschaften auszeichnet, die auch den Verfahren zur Herstellung 3D-gedruckter, insbesondere poröser, Formkörper und/oder von mit 3D-gedruckten, insbesondere porösen, Formkörpern ausgestatteten Substraten unmittelbar zugutekommen.

Insbesondere auch Teil des erfindungsgemäßen Verfahrens ist außerdem ein Verfahrensschritt 0), welcher den weiteren Verfahrensschritten I), II) usw. vorausgeht und das Bereitstellen eines digitalen Abbilds des herzustellenden Formkörpers umfasst. Der herzustellende Formkörper wird dann insbesondere nach den Formvorgaben des digitalen Abbilds in den nachfolgenden Verfahrensschritten dreidimensional geduckt.

Im Hinblick auf die Verfahrensführung hat es sich im Rahmen der Erfindung bewährt, wenn in Verfahrensschritt II) und/oder Verfahrensschritt IV) das Drucken der Schichten mit einer Dicke in einem Bereich von 0,05 mm bis 15 mm, insbesondere 0,1 mm bis 6 mm, vorzugsweise 0,15 mm bis 4 mm, durchgeführt wird.

Darüber hinaus hat es sich als vorteilhaft erwiesen, wenn in Verfahrensschritt II) und/oder Verfahrensschritt IV) das Drucken der Schichten mit einer Druckgeschwindigkeit in einem Bereich von 0,1 mm/sec bis 10 mm/sec, insbesondere 0,5 mm/sec bis 7,5 mm/sec, vorzugsweise 1 mm/sec bis 5 mm/sec, durchgeführt wird.

Wenn im Rahmen der Erfindung in den vorgenannten Parameterbereichen gearbeitet wird, können besonders stabile und formgetreue bzw. einem vorgegebenen Format entsprechende Formkörper erzeugt werden, die insbesondere auch zuverlässig initial in den Schichten ausgehärtet werden können, so dass eine vergleichsweise hohe strukturelle Integrität des Formkörpers erreicht werden kann.

Im Rahmen des erfindungsgemäßen Verfahrens werden außerdem gute Ergebnisse erhalten, wenn in Verfahrensschritt III) und/oder Verfahrensschritt V) und/oder Verfahrensschritt VI) das Bestrahlen mit Licht einer Wellenlänge im Bereich von 150 nm bis 600 nm, insbesondere 275 nm bis 525 nm, vorzugsweise 325 nm bis 475 nm, durchgeführt wird.

Ebenfalls hat es sich bewährt, wenn in Verfahrensschritt III) und/oder Verfahrensschritt V) das Bestrahlen über eine Zeitdauer von 1 sec bis 15 min, insbesondere 10 sec bis 5 min, vorzugsweise 20 sec bis 2,5 min, durchgeführt wird. Im Rahmen der vorliegenden Erfindung ist also insbesondere vorgesehen, dass die verwendete, insbesondere erfindungsgemäße, Zusammensetzung mittels UV-Lichtbestrahlung gehärtet werden kann, wobei die Initiierung und anfängliche Härtung der Zusammensetzung durch Bestrahlen mit Licht der vorgenannten Wellenlängen binnen kurzer Zeit erreicht werden kann. Gleichzeitig ist im Rahmen der Erfindung sichergestellt, dass sich die Härtung der Zusammensetzung so vollzieht, dass eine gedruckte Schicht hinreichend formstabilisiert und gleichzeitig genügend reaktiv ist bzw. bleibt, so dass mit nachfolgenden Schichten eine feste Vernetzung und insoweit insgesamt eine hohe integrale Festigkeit des Formkörpers erzielt wird.

Weiterhin hat es sich im Rahmen der Erfindung bewährt, wenn in Verfahrensschritt VI) das Bestrahlen über eine Zeitdauer von 10 min bis 5 h, insbesondere 15 min bis 4 h, vorzugsweise 20 min bis 3,5 h, durchgeführt wird.

Hierdurch kann ein vollständiges und abschließendes Aushärten der Zusammensetzung zum Formkörper sichergestellt werden, so dass Defekte oder Schwachstellen im Harzmaterial des Formkörpers bestmöglich vermieden werden können.

Im Rahmen einer besonderen Ausführung des erfindungsgemäßen Verfahrens hat es sich bewährt, wenn das Verfahren außerdem den weiteren Verfahrensschritt umfasst:
VII) Lösen des löslichen Füllstoffs (Komponente d)) in einem polaren Lösungsmittel unter Erzeugung von Poren und/oder einer porösen Struktur in dem Formkörper.

Hierdurch wird vorteilhaft eine poröse Struktur in dem Formkörper realisiert, so dass insbesondere beispielsweise atmungsaktive Materialverstärkungen von textilen Materialien auf Basis der vorliegenden Erfindung bereitgestellt werden können. Die poröse Struktur ist dabei vorteilhaft bereits im Rahmen der Herstellung des Formkörpers angelegt, so dass eine durchgehende, insbesondere offene, poröse Struktur auch im Inneren des Formkörpers realisiert werden kann. Dabei weist das Material bereits unmittelbar nach dem Druck und der Aushärtung, noch vor dem Waschvorgang, eine gewisse Porosität auf. Je nach Beschaffenheit der Zusammensetzung, insbesondere aber auch je nach Auftrag dieser, kann dabei im Rahmen der Erfindung die Porengröße sowie auch -verteilung in dem Formkörper beeinflusst und gesteuert werden. Auf diese Weise werden insbesondere auch gezielt inhomogene Porenstrukturen zugänglich, die eine feinabgestimmte Atmungsaktivität und Materialstabilität ermöglichen.

In diesem Zusammenhang hat es sich weiterhin bewährt, wenn in Verfahrensschritt VII) das Lösen in einem polaren Lösungsmittel ausgewählt aus der Gruppe bestehend aus Wasser, Methanol, Ethanol, Isopropanol, Aceton, Acetonitril, Dimethylformamid, Dimethylsulfoxid und deren Mischungen, insbesondere Wasser, Methanol, Isopropanol, Aceton und deren Mischungen, vorzugsweise Wasser, durchgeführt wird, insbesondere mittels Spülen, Besprühen, Tränken, Tauchbaden mit bzw. in dem Lösungsmittel.

Gute Ergebnisse werden dabei erhalten, wenn in Verfahrensschritt VII) das Lösen über eine Zeitdauer von 10 min bis 36 h, insbesondere 1 h bis 24 h, vorzugsweise 3 h bis 20 h, durchgeführt wird.

Ebenfalls werden gute Ergebnisse erhalten, wenn in Verfahrensschritt VII) das Lösen bei einer Temperatur in einem Bereich von 34 °C bis 80 °C, insbesondere 42 °C bis 65 °C, vorzugsweise 50 °C bis 60 °C, durchgeführt wird.

Darüber hinaus hat es sich im Rahmen der Erfindung bewährt, wenn in Verfahrensschritt VII) der Formkörper im Anschluss an das Lösen des löslichen Füllstoffes aus dem Formkörper getrocknet wird, insbesondere bei einer Temperatur in einem Bereich von 34 °C bis 80 °C, insbesondere 42 °C bis 65 °C, vorzugsweise 50 °C bis 60 °C, und/oder über eine Zeitdauer von 10 min bis 36 h, insbesondere 1 h bis 24 h, vorzugsweise 3 h bis 20 h.

Die vorgenannten Temperaturen bzw. Zeitdauern gestatten eine möglichst vollständige Trocknung des Formkörpers bzw. des damit ausgestatteten Substrats.

Im Rahmen einer bevorzugten Ausführung der vorliegenden Erfindung kann es schließlich vorgesehen sein, dass das Verfahren außerdem den weiteren optionalen Verfahrensschritt umfasst:
VIII)Ablösen des 3D-gedruckten, insbesondere porösen, Formkörpers von dem temporären Träger.

Gegenstand der vorliegenden Erfindung gemäß dem geltenden Aspekt ist damit insbesondere auch ein solches Verfahren, insbesondere 3D-Druckverfahren, zur Herstellung 3D-gedruckter, insbesondere poröser, Formkörper und/oder von mit 3D-gedruckten, insbesondere porösen, Formkörpern ausgestatteten Substraten, insbesondere wie zuvor beschrieben,
welches die folgenden Schritte umfasst:
I) Vorlegen einer, insbesondere 3D-verdruckbaren, Zusammensetzung, insbesondere wie zuvor beschrieben und/oder erhalten nach einem Herstellungsverfahren wie zuvor beschrieben, auf Kunstharzbasis, wobei die Zusammensetzung die folgenden Komponenten a) bis d) aufweist:
   a) ein flüssiges Harz,
   b) ein pulverförmiges Harz,
   c) einen photoreaktiven Verdünner,
   d) einen löslichen Füllstoff,

   wobei die Komponenten a) bis c) gleiche reaktive Endgruppen aufweisen, und
   wobei der Füllstoff (Komponente d)) in einem polaren Lösungsmittel löslich ist,
II) Drucken einer ersten Schicht der Zusammensetzung auf einem Substrat und/oder einem temporären Träger,
III) optional Bestrahlen der Schicht der Zusammensetzung unter teilweiser Härtung der Zusammensetzung,
IV) Drucken weiterer Schichten der Zusammensetzung unter Ausbildung weiterer Schichten der Zusammensetzung,
V) optional Bestrahlen der Schichten der Zusammensetzung, insbesondere nach jedem Druckschritt, unter teilweiser Härtung der Zusammensetzung, wobei die Schritte IV) und V) wiederholt werden, bis der Formkörper erhalten ist,
VI) abschließendes Bestrahlen des Formkörpers aus der Zusammensetzung unter vollständiger Aushärtung der Zusammensetzung,
VII) Lösen des löslichen Füllstoffs (Komponente d)) in einem polaren Lösungsmittel unter Erzeugung von Poren und/oder einer porösen Struktur in dem Formkörper, und/oder
VIII) optional Ablösen des 3D-gedruckten, insbesondere porösen, Formkörpers von dem temporären Träger.

Für diese bevorzugte Ausgestaltung des erfindungsgemäßen Verfahrens gelten die gleichen Vorteile und Besonderheiten wie zuvor für das Verfahren nach der vorliegenden Erfindung im Einzelnen erläutert.

Insgesamt gestattet das erfindungsgemäße Verfahren unkompliziert, flexibel sowie maßgeschneidert für den jeweiligen Verwendungszweck die Herstellung von insbesondere porösen 3D-gedruckten Formkörpern, die beispielsweise als Materialverstärkungen auf textile Substrate aufgebracht sein können und als solche Bestandteile von Schutzkleidung, beispielsweise zum Schlag- oder Stichschutz, sein können.

Für weitergehende Einzelheiten zu diesem Erfindungsaspekt kann auf die obigen Ausführungen zu den übrigen Aspekten der vorliegenden Erfindung verwiesen werden, welche in Bezug auf den vorliegenden Aspekt entsprechend gelten.

Weiterer Gegenstand der vorliegenden Erfindung - gemäß einem **fünften** Aspekt der vorliegenden Erfindung - ist ein Formkörper, insbesondere 3D-gedruckter, insbesondere poröser, Formkörper, auf Kunstharzbasis erhältlich aus einer Zusammensetzung nach der vorliegenden Erfindung wie zuvor beschrieben und/oder erhalten nach einem Herstellungsverfahren wie zuvor beschrieben und/oder Formkörper erhältlich nach einem Verfahren wie zuvor beschrieben.

Gemäß diesem Aspekt gleichermaßen auch Gegenstand der vorliegenden Erfindung ist ein Formkörper, insbesondere 3D-gedruckter, insbesondere poröser, Formkörper, auf Kunstharzbasis,
wobei der Formköper eine ausgehärtete, insbesondere 3D-verdruckte, Zusammensetzung initial aufweisend die folgenden Komponenten a) bis d):
   a) ein flüssiges Harz,
   b) ein pulverförmiges Harz,
   c) einen photoreaktiven Verdünner,
   d) einen löslichen Füllstoff,
insbesondere eine Zusammensetzung nach der vorliegenden Erfindung wie zuvor beschrieben, und/oder erhalten nach einem Herstellungsverfahren wie zuvor beschrieben, umfasst,
wobei die Komponenten a) bis c) gleiche reaktive Endgruppen aufweisen, und wobei der Füllstoff (Komponente d)) in einem polaren Lösungsmittel löslich ist.

Formkörper mit einer solchen Zusammensetzung zeichnen sich durch eine feste sowie gleichwohl flexible, dauerhafte sowie belastbare Struktur aus, die insbesondere auf die verwendete Kombination von Komponenten a) bis d) zurückgeführt werden kann.

Vorteilhaft können auch transparente, poröse Formkörper erhalten werden, sowie gleichermaßen auch eingefärbte Formkörper, wenn der Zusammensetzung nach der vorliegenden Erfindung Farbstoffe zugegeben werden. Dies kann für die Verarbeitbarkeit mit textilen Substraten und dergleichen vorteilhaft sein, beispielsweise für funktionale oder auch dekorative Optiken.

Im Rahmen einer bevorzugten Ausführung der vorliegenden Erfindung ist es vorgesehen, dass der Formkörper Poren und/oder eine poröse Struktur aufweist, insbesondere wobei die Poren und/oder poröse Struktur durch Lösen des löslichen Füllstoffs (Komponente d)) in einem polaren Lösungsmittel resultiert/en und/oder erhalten sind.

Gegenstand der vorliegenden Erfindung gemäß dem geltenden Aspekt ist damit insbesondere auch ein solcher poröser Formkörper, insbesondere 3D-gedruckter poröser Formkörper, auf Kunstharzbasis, insbesondere Formkörper wie zuvor beschrieben,
welcher eine ausgehärtete, insbesondere 3D-verdruckte, Zusammensetzung initial aufweisend die folgenden Komponenten a) bis d):
   a) ein flüssiges Harz,
   b) ein pulverförmiges Harz,
   c) einen photoreaktiven Verdünner,
   d) einen löslichen Füllstoff,
insbesondere eine Zusammensetzung nach der vorliegenden Erfindung wie zuvor beschrieben und/oder erhalten nach einem Herstellungsverfahren wie zuvor beschrieben, umfasst,
wobei die Komponenten a) bis c) gleiche reaktive Endgruppen aufweisen, und wobei die Poren und/oder poröse Struktur des Formkörpers durch Lösen des löslichen Füllstoffs (Komponente d)) in einem polaren Lösungsmittel resultiert/en und/oder erhalten ist/sind.

Für diese bevorzugte Ausgestaltung des erfindungsgemäßen Formkörpers gelten die gleichen Vorteile und Besonderheiten wie zuvor für den Formkörper nach der vorliegenden Erfindung im Einzelnen erläutert.

Im Rahmen der Erfindung ist es bevorzugt vorgesehen, dass der Formkörper eine Porosität in einem Bereich von 0,5 % bis 40 %, insbesondere 1 % bis 30 %, vorzugsweise 1,5 % bis 27,5 %, aufweist, insbesondere wobei die Bestimmung der Porosität in Anlehnung an DIN 66139 mittels Gasadsorption erfolgt.

Darüber hinaus hat es sich bewährt, wenn der Formkörper einen durchschnittlichen Porendurchmesser in einem Bereich von 1,5 µm bis 100 µm, insbesondere 3,5 µm bis 60 µm, vorzugsweise 5 µm bis 40 µm, aufweist. Die Bestimmung der durchschnittlichen Porendurchmesser erfolgt ebenfalls vorzugsweise in Anlehnung an DIN 66139 mittels Gasadsorption.

Formkörper mit einer Porosität bzw. Porenstruktur, wie zuvor genannt, zeichnen sich durch ein optimiertes Volumen-zu-Gewicht-Verhältnis aus. Darüber hinaus liegt eine solche Porosität bzw. Porenstruktur vor, die beispielsweise bei Verwendung mit einem textilen Substrat eine atmungsaktive Struktur des Formkörpers realisiert, so dass etwa Feuchtigkeit und auch Luft hinreichend gut durch die Materialporen diffundieren können, so dass auf Basis des Formkörpers ein Luftaustausch mit sowie eine Feuchtigkeitsabgabe an eine(r) entsprechende(n) Umgebung möglich wird.

Im Rahmen der Erfindung ist es außerdem bevorzugt, wenn der Formkörper eine Biegefestigkeit in einem Bereich von 2 MPa bis 80 MPa, insbesondere 4 MPa bis 60 MPa, vorzugsweise 5 MPa bis 45 MPa, aufweist, insbesondere wobei die Bestimmung der Biegefestigkeit in Anlehnung an DIN EN ISO 178 erfolgt ist.

Ebenfalls hat es sich bewährt, wenn der Formkörper eine Biegedehnung in einem Bereich von 1 % bis 15 %, insbesondere 2 % bis 12,5 %, vorzugsweise 2,5 % bis 9,5 %, aufweist. Die Bestimmung der Biegespannung erfolgt dabei ebenfalls vorzugsweise in Anlehnung an DIN EN ISO 178.

Erfindungsgemäße Formkörper weisen vorteilhaft also eine hinreichend hohe Festigkeit auf, ohne jedoch vollständig starr oder spröde zu sein. Insbesondere gewähren erfindungsgemäße Formkörper eine gewisse Flexibilität, die für einen Einsatz als Materialverstärkung in bzw. auf textilen Substraten insoweit vorteilhaft ist, als dass der Formkörper bzw. die daraus erhaltene Materialverstärkung eine gewisse Bewegungstoleranz hat bzw. einräumt.

Textile Substrate, die mit dem erfindungsgemäßen Formkörper versehen sind, bzw. in diesem Sinne auch Formkörper-Substrat-Komposite zeichnen sich also durch eine gewisse Formvariabilität sowie gleichzeitig -stabilität aus, so dass sich entsprechende textile Substrate bzw. Formkörper-Substrat-Komposite für die zumindest bereichsweise Verwendung in Schutzkleidung besonders eignen.

Für weitergehende Einzelheiten zu diesem Erfindungsaspekt kann auf die obigen Ausführungen zu den übrigen Aspekten der vorliegenden Erfindung verwiesen werden, welche in Bezug auf den vorliegenden Aspekt entsprechend gelten.

Weiterer Gegenstand der vorliegenden Erfindung - gemäß einem **sechsten** Aspekt der vorliegenden Erfindung - ist daher auch die Verwendung eines, insbesondere 3D-gedruckten, insbesondere porösen, Formkörpers auf Kunstharzbasis nach der vorliegenden Erfindung wie zuvor beschrieben und/oder erhalten nach einem Herstellungsverfahren wie zuvor beschrieben zur Verstärkung von mit dem Formkörper ausgestatteten Substraten.

Vorzugsweise ist das Substrat dabei ein textiles Substrat, vorzugsweise ausgewählt aus der Gruppe bestehend aus Geweben, Gewirken, Gestricken, Geflechten, Nähgewirken, Vliesstoffen und Filzen.

Besonders bewährt hat es sich im Rahmen der vorliegenden Erfindung, wenn das Substrat ein textiles Substrat in Form einer Schutzbekleidung, insbesondere in Form eines Handschuhs, einer Oberbekleidung, vorzugsweise eines Pullovers, einer Weste, eine Jacke, einer Unterbekleidung, vorzugsweise einer Hose, einer Unterhose, eines Gelenkschutzes, vorzugsweise zum Schutz von Kniegelenk, Hand- und/oder Fußgelenk, Ellenbogen, Schulter, ist.

Für weitergehende Einzelheiten zu diesem Erfindungsaspekt kann auf die obigen Ausführungen zu den übrigen Aspekten der vorliegenden Erfindung verwiesen werden, welche in Bezug auf den vorliegenden Aspekt entsprechend gelten.

Schließlich auch Gegenstand der vorliegenden Erfindung - gemäß einem siebten Aspekt der vorliegenden Erfindung - ist zudem ein Substrat, insbesondere textiles Substrat, aufweisend einen, insbesondere 3D-gedruckten, insbesondere porösen, Formkörper auf Kunstharzbasis nach der vorliegenden Erfindung wie zuvor beschrieben und/oder erhalten nach einem Herstellungsverfahren wie zuvor beschrieben als zumindest bereichsweise Verstärkung des textilen Substrats.

Im Rahmen der Erfindung hat es sich dabei bewährt, wenn das Substrat ein textiles Substrat ausgewählt aus der Gruppe bestehend aus Geweben, Gewirken, Gestricken, Geflechten, Nähgewirken, Vliesstoffen und Filzen, ist.

Vorzugsweise ist das Substrat ein textiles Substrat in Form einer Schutzbekleidung, insbesondere in Form eines Handschuhs, einer Oberbekleidung, vorzugsweise eines Pullovers, einer Weste, eine Jacke, einer Unterbekleidung, vorzugsweise einer Hose, einer Unterhose, eines Gelenkschutzes, vorzugsweise zum Schutz von Kniegelenk, Hand- und/oder Fußgelenk, Ellenbogen, Schulter.

Für weitergehende Einzelheiten zu diesem Erfindungsaspekt kann auf die obigen Ausführungen zu den übrigen Aspekten der vorliegenden Erfindung verwiesen werden, welche in Bezug auf den vorliegenden Aspekt entsprechend gelten.

Der Gegenstand der vorliegenden Erfindung wird nachfolgend in nicht beschränkender Weise anhand der Ausführungsbeispiele verdeutlicht.

Im Zusammenhang mit der Erläuterung dieser bevorzugten Ausführungsbeispiele bzw. Ausführungsformen der vorliegenden Erfindung, welche in Bezug auf die vorliegende Erfindung keinesfalls beschränkend sind, werden auch weitergehende Vorteile, Eigenschaften, Aspekte und Merkmale der vorliegenden Erfindung aufgezeigt.

### Ausführungsbeispiele

### 1. Herstellung erfindungsgemäßer Zusammensetzung auf Kunstharzbasis

Auf Basis der in der nachfolgenden Tabelle angegebenen Bestandteile, die zuvor auch eingehend beschrieben wurden, worauf insoweit auch verwiesen wird, ist eine Zusammensetzung nach der vorliegenden Erfindung hergestellt worden:

**Tab. 1: Beispielhafte Rezeptur für erfindungsgemäße Zusammensetzungen**

| Komponente | Bestandteil | Mengenanteil [Gew.-%] |
|---|---|---|
| a) flüssiges Harz | Aliphatisches Urethan-Acrylat-Harz | 14,7 |
| b) pulverförmiges Harz | Urethan-Acrylat in AcrylMonomeren | 14,7 |
| c) photoreaktiver Verdünner | Monofunktionelles AcrylMonomer | 42,7 |
| d) löslicher Füllstoff | s. Tabelle 2 | 23,7 |
| e) Dispersions- und Feuchthaltemittel | Niedermolekularer Zusatzstoff | 3,8 |
| f) Initiator | Monoacylphosphinoxid-Photoinitiator | 0,4 |

Die Zusammensetzung der Komponente d) wurde, wie in der nachfolgenden Tabelle wiedergegeben, variiert und entsprechend eine Reihe verschiedener erfindungsgemäßer Zusammensetzungen hergestellt.

**Tab. 2: erfindungsgemäße Zusammensetzung**

| Komponente d) | Zusammensetzung [%] |
|---|---|
| MgCl₂ | 100 |
| NaCl | 100 |
| Puderzucker | 100 |
| Brauner Kristallzucker | 100 |
| Weißer Kristallzucker, brauner Kristallzucker | 50 : 50 |
| MgCl₂, Feinzucker | 50 : 50 |

Erfindungsgemäße Zusammensetzungen wurden dabei nach der folgenden Vorgehensweise hergestellt:
Zunächst wird die Komponente b) für eine Stunde bei einer Temperatur von 40 °C erwärmt. Nachfolgend werden schrittweise zunächst die Komponenten a), dann die Komponente c), und die Komponente e) hinzugegeben. Die Mischung wird zu einer homogenen Zusammensetzung verrührt. Anschließend wird die Komponente f) hinzugegeben und wiederum zu einer homogenen Mischung verrührt. Abschließend wird die Komponente d) zu der Zusammensetzung zugegeben und verrührt.

### 2. Herstellung erfindungsgemäßer 3D-gedruckter Formkörper aus Zusammensetzungen auf Kunstharzbasis

Die gemäß 1. hergestellten Zusammensetzungen sind mittels 3D-Druck zu Formkörpern verarbeitet worden. Die Herstellung 3D-gedruckter Formköper erfolgte auf einem *Anycubic Photon S* 3D-Drucker mit UV-Bestrahlungseinrichtung (405 nm).

Vorgegebene Schichtdicken lagen bei Werten von 0,05 mm, 0,3 mm, 0,5 mm. Zwischen jedem Schichtauftrag wurde eine Bestrahlung der Schichten mit UV-Licht vorgenommen, um das Härten der Harzzusammensetzung zu initiieren. Bestrahlungsdauern wurden auf Zeitdauern von 30 sec und 50 sec festgelegt.

Die Druckgeschwindigkeit ist auf Werte von 1 mm/sec, 1,5 mm/s, 2 mm/sec und 3 mm/sec eingestellt worden.

Mit den vorgenannten Parametern sind verschiedene Formkörper hergestellt worden.

Nach Abschluss des 3D-Druckvorgangs ist eine finale Härtung der Kunstharzformkörper durch Bestrahlung mit UV-Licht (405 nm) für einen Zeitraum von 40 min, 1 h und 2 h durchgeführt worden.

Zur Erzeugung poröser Formkörper sind ausgehärtete Formkörper für 18 h in ein Tauchbad mit Wasser eingelegt worden. Nach Ablauf der Zeit sind die Formkörper aus dem Tauchbad entnommen worden und weitere 18 h bei 55 °C getrocknet worden.

### 3. Eigenschaften erfindungsgemäßer 3D-gedruckter Formkörper aus Zusammensetzungen auf Kunstharzbasis

Die erzeugten Formkörper sind auf ihre physikalischen und mechanischen Eigenschaften hin untersucht worden. Die diesbezüglichen Ergebnisse sind in den nachfolgenden Tabellen wiedergegeben. Alle angegebenen Parameter sind mit Standardbestimmungsmethoden ermittelt worden.

**Tab. 3: Eigenschaften eines Formkörpers gemäß Tab. 1 mit 100 % MgCl₂ als Komponente d)**

| | |
|---|---|
| Porosität [%] | 10.4 |
| durchschnittlicher Porendurchmesser [µm] | 9.78 |
| Biegefestigkeit [MPa] | 21.01 |
| Biegedehnung [%] | 4.26 |

**Tab. 4: Eigenschaften von Formkörpern gemäß Tab. 1 mit variierender Zusammensetzung der Komponente d)**

| Komponente d) (Zusammensetzung in [%]) | | Porosität [%] | durchschn. Porendurchmesser [µm] | Biegefestigkeit [MPa] |
|---|---|---|---|---|
| MgCl₂ | 100 | 21,53 | 38,27 | 14.48* |
| NaCl | 100 | 6,11 | 15,60 | 31,15 |
| Puderzucker | 100 | 1,44 | 18,29 | 15,59 |
| Brauner Kristallzucker | 100 | 10,27 | 33,30 | 23,76 |
| Weißer Kristallzucker, brauner Kristallzucker | 50 : 50 | 3,95 | 27,52 | 11,28 |
| MgCl₂, Feinzucker | 50 : 50 | 18,73 | 26,29 | 18,24 |

Im Rahmen der Erfindung können also flexibel modulierbar unterschiedliche Formkörper mit Poren bzw. einer porösen Struktur hergestellt werden. Insbesondere kann die Porosität von erfindungsgemäßen Formkörpern dabei auf Basis der Variation der Komponente d) unterschiedlich und insoweit bedarfsgerecht eingestellt werden. Gleiches gilt für die Porengröße, die ebenfalls anhand der Wahl des Füllstoffs variiert werden kann.

Gleichzeitig können im Rahmen der Erfindung hinreichend feste sowie gleichzeitig in gewissem Maße flexible bzw. nachgiebige Formkörper hergestellt werden, was für den intendierten Anwendungszweck als Materialverstärkung eines textilen Substrats besonders vorteilhaft ist.

Die gewählten Schichtdicken gestatten allesamt Zugang zu 3D-gedruckten intakten Formkörpern. Dabei ist festgestellt worden, dass Schichtdicken im Bereich um 0,3 mm sowohl im Hinblick auf die Form- bzw. Dimensionsstabilität der gedruckten Struktur als auch die Härtung der Kunstharzzusammensetzung gute Ergebnisse liefern.

Die gewählten Bestrahlungszeiten sind jeweils ausreichend, um eine hinreichende Zwischen- bzw. anfängliche Härtung der verdruckten Zusammensetzung zu erreichen. Bei Zwischenbestrahlungsdauern von 50 sec ist ein höherer initialer Aushärtungsgrad erreicht worden. Für die strukturelle Integrität und Stabilität des herzustellenden Formkörpers ist dies vorteilhaft.

Die gewählten Druckgeschwindigkeiten führen zu akzeptablen Druckergebnissen. Für die höhere Druckgeschwindigkeit von 1,5 mm/sec ist eine einheitliche und ebene Druckstruktur erhalten worden, so dass eine hohe Formgenauigkeit erzielt werden kann.

Die abschließenden Härtungszeiten liefern jeweils gehärtete Formkörper, wobei Unterschiede im finalen Härtegrad festgestellt werden können. Längere Bestrahlungsdauern liefern dabei härtere Formkörper, ohne jedoch zu spröden oder brüchigen Formkörpern zu führen.

Die Erzeugung poröser Strukturen vollzieht sich vollständig, so dass durchgehend poröse Formkörper erhalten werden können. Diese zeichnen sich je nach verwendetem Füllstoff durch unterschiedliche Porenstrukturen aus, so dass diese variable und bedarfsgerecht eingestellt werden können. Mithin wird ein atmungsaktiver Formkörper bereitgestellt, der Porengrößen und -anteile in Bereichen aufweist, die einen Gas- und Flüssigkeitsaustausch mit der Umgebung gestatten. Insoweit besteht auch eine vorteilhafte Eignung als Materialverstärkung für textile Substrate, bspw. als Stich- oder Schlagschutz.

## Patentansprüche

1. Zusammensetzung, insbesondere 3D-verdruckbare Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis,
**dadurch gekennzeichnet,**
**dass** die Zusammensetzung die folgenden Komponenten a) bis d) aufweist:
a) ein flüssiges Harz,
b) ein pulverförmiges Harz,
c) einen photoreaktiven Verdünner,
d) einen löslichen Füllstoff,
wobei die Komponenten a) bis c) gleiche reaktive Gruppen aufweisen, und
wobei der Füllstoff (Komponente d)) in einem polaren Lösungsmittel löslich ist.

2. Zusammensetzung nach Anspruch 1, wobei die reaktive Gruppe der Komponenten a) bis c) ausgewählt ist aus der Gruppe bestehend aus Acrylat, Acrylsäureester, Methacrylat, Methacrylsäureester, Acrylnitril, Styrol und deren Mischungen, insbesondere Acrylat, Acrylsäureester, Methacrylat, Methacrylsäureester und deren Mischungen, vorzugsweise Acrylsäureester, Methacrylsäureester und deren Mischungen.

3. Zusammensetzung nach einem der vorangehenden Ansprüche, wobei die Komponenten a) und b) die gleiche Basisstruktur aufweisen, insbesondere wobei die Basisstruktur eine Struktur aus Oligomeren, Prepolymeren und/oder Polymeren ausgewählt aus der Gruppe bestehend aus Urethan, Vinylester, Polyester, Acrylat und deren Mischungen, insbesondere Urethan, Acrylat und deren Mischungen, vorzugsweise Urethan, ist.

4. Zusammensetzung nach einem der vorangehenden Ansprüche, wobei die Komponente d) in partikulärer, insbesondere kristalliner, Form, vorzugsweise in Form kristalliner Mikropartikel, vorliegt.

5. Zusammensetzung nach einem der vorangehenden Ansprüche, wobei die Zusammensetzung die Komponente a) in Mengen in einem Bereich von weniger als 35 Gew.-%, insbesondere weniger als 25 Gew.-%, vorzugsweise weniger als 20 Gew.-%, bezogen auf die Gesamtzusammensetzung, aufweist, und/oder wobei die Zusammensetzung die Komponente a) in Mengen in einem Bereich von mehr als 5 Gew.-%, insbesondere mehr als 8 Gew.-%, vorzugsweise mehr als 12 Gew.-%, bezogen auf die Gesamtzusammensetzung, aufweist, und/oder wobei die Zusammensetzung die Komponente a) in Mengen in einem Bereich von 5 Gew.-% bis 35 Gew.-%, insbesondere 8 Gew.-% bis 25 Gew.-%, vorzugsweise 12 Gew.-% bis 20 Gew.-%, bezogen auf die Gesamtzusammensetzung, aufweist.

6. Zusammensetzung nach einem der vorangehenden Ansprüche, wobei die Zusammensetzung die Komponente b) in Mengen in einem Bereich von weniger als 35 Gew.-%, insbesondere weniger als 25 Gew.-%, vorzugsweise weniger als 20 Gew.-%, bezogen auf die Gesamtzusammensetzung, aufweist, und/oder
wobei die Zusammensetzung die Komponente b) in Mengen in einem Bereich von mehr als 5 Gew.-%, insbesondere mehr als 8 Gew.-%, vorzugsweise mehr als 12 Gew.-%, bezogen auf die Gesamtzusammensetzung, aufweist, und/oder
wobei die Zusammensetzung die Komponente b) in Mengen in einem Bereich von 5 Gew.-% bis 35 Gew.-%, insbesondere 8 Gew.-% bis 25 Gew.-%, vorzugsweise 12 Gew.-% bis 20 Gew.-%, bezogen auf die Gesamtzusammensetzung, aufweist.

7. Zusammensetzung nach einem der vorangehenden Ansprüche, wobei die Zusammensetzung die Komponente c) in Mengen in einem Bereich von weniger als 80 Gew.-%, insbesondere weniger als 60 Gew.-%, vorzugsweise weniger als 50 Gew.-%, bezogen auf die Gesamtzusammensetzung, aufweist, und/oder
wobei die Zusammensetzung die Komponente c) in Mengen in einem Bereich von mehr als 20 Gew.-%, insbesondere mehr als 30 Gew.-%, vorzugsweise mehr als 40 Gew.-%, bezogen auf die Gesamtzusammensetzung, aufweist, und/oder
wobei die Zusammensetzung die Komponente c) in Mengen in einem Bereich von 20 Gew.-% bis 80 Gew.-%, insbesondere 30 Gew.-% bis 60 Gew.-%, vorzugsweise 40 Gew.-% bis 50 Gew.-%, bezogen auf die Gesamtzusammensetzung, aufweist.

8. Zusammensetzung nach einem der vorangehenden Ansprüche, wobei die Zusammensetzung die Komponenten a) und b) sowie die Komponente c) in einem gewichtsbezogenen Verhältnis a) & b) : c) in einem Bereich von 0,25 : 1 bis 1,5 : 1, insbesondere 0,4 : 1 bis 1,25 : 1, vorzugsweise 0,5 : 1 bis 1 : 1, aufweist.

9. Zusammensetzung nach einem der vorangehenden Ansprüche, wobei die Zusammensetzung die Komponente d) in Mengen in einem Bereich von weniger als 50 Gew.-%, insbesondere weniger als 40 Gew.-%, vorzugsweise weniger als 30 Gew.-%, bezogen auf die Gesamtzusammensetzung, aufweist, und/oder
wobei die Zusammensetzung die Komponente d) in Mengen in einem Bereich von mehr als 10 Gew.-%, insbesondere mehr als 15 Gew.-%, vorzugsweise mehr als 20 Gew.-%, bezogen auf die Gesamtzusammensetzung, aufweist, und/oder
wobei die Zusammensetzung die Komponente d) in Mengen in einem Bereich von 10 Gew.-% bis 50 Gew.-%, insbesondere 15 Gew.-% bis 40 Gew.-%, vorzugsweise 20 Gew.-% bis 30 Gew.-%, bezogen auf die Gesamtzusammensetzung, aufweist.

10. Zusammensetzung nach einem der vorangehenden Ansprüche, wobei die Zusammensetzung die Komponenten a), b) und c) sowie die Komponente d) in einem gewichtsbezogenen Verhältnis a), b) & c) : d) in einem Bereich von 7 : 1 bis 1,5 : 1, insbesondere 5: 1 bis 1,75 : 1, vorzugsweise 3,5 : 1 bis 2,5 : 1, aufweist.

11. Verfahren zur Herstellung einer Zusammensetzung, insbesondere einer 3D-verdruckbaren Zusammensetzung, vorzugsweise zur Herstellung 3D-gedruckter, insbesondere poröser, Formkörper und/oder von mit 3D-gedruckten, insbesondere porösen, Formkörpern ausgestatteten Substraten, auf Kunstharzbasis, insbesondere Zusammensetzung gemäß den vorangehenden Ansprüchen,
**dadurch gekennzeichnet,**
**dass** das Verfahren die folgenden Schritte umfasst:
v) Vorlegen und Erwärmen eines pulverförmigen Harzes, insbesondere gemäß Komponente b),
vi) Schrittweises Hinzugeben eines flüssigen Harzes, insbesondere gemäß Komponente a), sowie eines photoreaktiven Verdünners, insbesondere gemäß Komponente c),
vii) Erzeugen einer homogenen Mischung,
viii) Hinzugeben eines löslichen Füllstoffes, insbesondere gemäß Komponente d),
wobei die in den Schritten i) bis iii) verwendeten Substanzen, insbesondere die Komponenten a) bis c), gleiche reaktive Endgruppen aufweisen, und wobei der Füllstoff (Komponente d)) in einem polaren Lösungsmittel löslich ist.

12. Verwendung einer Zusammensetzung nach einem der diesbezüglichen vorangehenden Ansprüche und/oder erhalten nach einem Herstellungsverfahren gemäß Anspruch 11 in einem Verfahren zur Herstellung 3D-gedruckter, insbesondere poröser, Formkörper und/oder von mit 3D-gedruckten, insbesondere porösen, Formkörpern ausgestatteten Substraten und/oder für 3D-gedruckte, insbesondere poröse, Formkörper und/oder als Ausgangsmasse für 3D-gedruckte, insbesondere poröse, Formkörper.

13. Verfahren, insbesondere 3D-Druckverfahren, zur Herstellung 3D-gedruckter, insbesondere poröser, Formkörper und/oder von mit 3D-gedruckten, insbesondere porösen, Formkörpern ausgestatteten Substraten,
**dadurch gekennzeichnet,**
**dass** das Verfahren die folgenden Schritte umfasst:
I) Vorlegen einer, insbesondere 3D-verdruckbaren, Zusammensetzung, insbesondere nach einem der diesbezüglichen vorangehenden Ansprüche und/oder erhalten nach einem Herstellungsverfahren gemäß Anspruch 11, auf Kunstharzbasis, wobei die Zusammensetzung die folgenden Komponenten a) bis d) aufweist:
a) ein flüssiges Harz,
b) ein pulverförmiges Harz,
c) einen photoreaktiven Verdünner,
d) einen löslichen Füllstoff,
wobei die Komponenten a) bis c) gleiche reaktive Endgruppen aufweisen, und wobei der Füllstoff (Komponente d)) in einem polaren Lösungsmittel löslich ist,
II) Drucken einer ersten Schicht der Zusammensetzung auf einem Substrat und/oder einem temporären Träger,
III) optional Bestrahlen der Schicht der Zusammensetzung unter teilweiser Härtung der Zusammensetzung,
IV) Drucken weiterer Schichten der Zusammensetzung unter Ausbildung weiterer Schichten der Zusammensetzung,
V) optional Bestrahlen der Schichten der Zusammensetzung, insbesondere nach jedem Druckschritt, unter teilweiser Härtung der Zusammensetzung, wobei die Schritte IV) und V) wiederholt werden, bis der Formkörper erhalten ist,
VI) abschließendes Bestrahlen des Formkörpers aus der Zusammensetzung unter vollständiger Aushärtung der Zusammensetzung.

14. Verfahren nach einem der vorangehenden Ansprüche, wobei das Verfahren außerdem den weiteren Verfahrensschritt umfasst:
VII) Lösen des löslichen Füllstoffs (Komponente d)) in einem polaren Lösungsmittel unter Erzeugung von Poren und/oder einer porösen Struktur in dem Formkörper, und/oder
wobei das Verfahren außerdem den weiteren optionalen Verfahrensschritt umfasst:
VIII)Ablösen des 3D-gedruckten, insbesondere porösen, Formkörpers von dem temporären Träger.

15. Formkörper, insbesondere 3D-gedruckter, insbesondere poröser, Formkörper, auf Kunstharzbasis erhältlich aus einer Zusammensetzung nach einem der Ansprüche 1 bis 10 und/oder erhalten nach einem Herstellungsverfahren gemäß Anspruch 11 und/oder Formkörper erhältlich nach einem Verfahren gemäß einem der Ansprüche 13 oder 14.

16. Formkörper, insbesondere 3D-gedruckter, insbesondere poröser, Formkörper, auf Kunstharzbasis,
**dadurch gekennzeichnet,**
**dass** der Formköper eine ausgehärtete, insbesondere 3D-verdruckte, Zusammensetzung initial aufweisend die folgenden Komponenten a) bis d):
e) ein flüssiges Harz,
f) ein pulverförmiges Harz,
g) einen photoreaktiven Verdünner,
h) einen löslichen Füllstoff,
insbesondere eine Zusammensetzung nach einem der Ansprüche 1 bis 10, und/oder erhalten nach einem Herstellungsverfahren gemäß Anspruch 11, umfasst,
wobei die Komponenten a) bis c) gleiche reaktive Endgruppen aufweisen, und wobei der Füllstoff (Komponente d)) in einem polaren Lösungsmittel löslich ist.

17. Verwendung eines, insbesondere 3D-gedruckten, insbesondere porösen, Formkörpers auf Kunstharzbasis nach Anspruch 15 oder 16 und/oder erhalten nach einem Herstellungsverfahren gemäß einem der Ansprüche 13 oder 14 zur Verstärkung von mit dem Formkörper ausgestatteten Substraten,
insbesondere wobei das Substrat ein textiles Substrat, vorzugsweise ausgewählt aus der Gruppe bestehend aus Geweben, Gewirken, Gestricken, Geflechten, Nähgewirken, Vliesstoffen und Filzen, ist.

18. Substrat, insbesondere textiles Substrat, aufweisend einen, insbesondere 3D-gedruckten, insbesondere porösen, Formkörper auf Kunstharzbasis nach Anspruch 15 oder 16 und/oder erhalten nach einem Herstellungsverfahren gemäß einem der Ansprüche 13 oder 14 als zumindest bereichsweise Verstärkung des textilen Substrats.
